(19) Europäisches Patentamt / European Patent Office / Office européen des brevets

(11) **EP 4 510 287 A1**

(12) **EUROPEAN PATENT APPLICATION**
published in accordance with Art. 153(4) EPC

(43) Date of publication:
**19.02.2025 Bulletin 2025/08**

(21) Application number: **22961789.9**

(22) Date of filing: **14.10.2022**

(51) International Patent Classification (IPC):
*H01M 10/0587* $^{(2010.01)}$

(52) Cooperative Patent Classification (CPC):
**H01M 10/0587**

(86) International application number:
**PCT/CN2022/125414**

(87) International publication number:
**WO 2024/077602 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **CAO, Dan**
**Ningde, Fujian 352100 (CN)**
• **CHAI, Zhisheng**
**Ningde, Fujian 352100 (CN)**
• **GU, Hui**
**Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **ELECTRODE ASSEMBLY, BATTERY CELL, BATTERY AND ELECTRIC DEVICE**

(57) An electrode assembly (10), comprising a first plate (11), a second plate (12), and a separator (13) arranged between the first plate (11) and the second plate (12), wherein the first plate (11), the second plate (12) and the separator (13) are wound in a winding direction (r) and form a winding structure (100); and at least one of the first plate (11) and the second plate (12) is provided with a flexible separation layer (14) between an end region (15) of at least one end in the winding direction (r) and a separator section of the separator (13) adjacent to the end region (15), and the flexible separation layer (14) protrudes from an edge of the end region (15) in a circumferential direction of the winding structure (100).

FIG. 4B

EP 4 510 287 A1

## Description

### FIELD

The present disclosure relates to the technical field of batteries, and in particularly, to an electrode assembly, a battery cell, a battery, and an electric device.

### BACKGROUND

A secondary battery, especially a lithium ion battery, has advantages of a high voltage, great specific energy, a long cycle life, being green and pollution-free, a wide operation temperature range, and small self-discharge. In this way, the secondary battery has found wide application in portable electronic devices and power devices of large new energy electric vehicles. Therefore, the secondary battery is of great significance in solving human environmental pollution and energy crisis. With the extensive utilization of secondary battery, use reliability of battery becomes a matter of close concern to users.

### SUMMARY

In an aspect of the present disclosure, an electrode assembly is provided. The electrode assembly includes: a first electrode plate, a second electrode plate, and a separator disposed between the first electrode plate and the second electrode plate. The first electrode plate, the second electrode plate, and the separator are wound in a winding direction and form a winding structure.

A flexible interlayer is provided between an end portion region of at least one end of at least one of the first electrode plate and the second electrode plate in the winding direction and a separator segment of the separator that is adjacent to the end portion region. The flexible interlayer protrudes from an edge of the end portion region in a circumferential direction of the winding structure.

By providing the flexible interlayer between the end portion region and the separator segment adjacent to the end portion region, and by causing the flexible interlayer to protrude from the edge of the end portion region, concentrated shear stress formed by steps may be dispersed through the flexible interlayer. In this way, a risk of the electrode plate fracturing under the action of shear force is lowered. Therefore, use reliability of the electrode assembly is further improved.

In some embodiments, one of the end portion region and the separator segment is bonded to the flexible interlayer; and another one of the end portion region and the separator segment is in slidable contact with the flexible interlayer.

Relative fixation between the one of the end portion region and the separator segment and the flexible interlayer is realized by bonding, such that the flexible interlayer may be kept in a region where the step is located. Therefore, an effective dispersion effect on the shear stress is ensured. By making the other one of the end portion region and the separator segment in slidable contact with the flexible interlayer, a phenomenon of wrinkling of the separator, caused by bonding the end portion region, the separator segment, and the flexible interlayer together, is avoided.

In some embodiments, the flexible interlayer includes at least one single-sided adhesive tape.

A bonding effect is achieved through a bonding surface of the single-sided adhesive tape. Slidable contact of the single-sided adhesive tape with a surface of the end portion region or a surface of the separator segment is achieved through a non-bonding surface.

In some embodiments, the separator segment includes: a first separator segment located at an inner side of the end portion region; and a second separator segment located at an outer side of the end portion region.

The flexible interlayer includes a first single-sided adhesive tape bonded to one of the first separator segment and the second separator segment.

A side of the end portion region has the first single-sided adhesive tape bonded to a separator segment at the side of the end portion region. In this way, a dispersion effect of shear stress of the end portion region of the electrode plate on an electrode plate at the inner side or the outer side of the end portion region can be realized through the first single-sided adhesive tape. Moreover, burrs at a cut portion of the end portion region may also be separated from the separator segment at the side through the first single-sided adhesive tape. Therefore, a risk of the burrs piercing the separator segment to be in lap joint with an electrode plate having another polarity to cause short circuit is prevented.

In some embodiments, the separator segment includes: a first separator segment located at an inner side of the end portion region; and a second separator segment located at an outer side of the end portion region.

The flexible interlayer includes a first single-sided adhesive tape and a second single-sided adhesive tape that are bonded to the first separator segment and the second separator segment, respectively; and a protruding length of the first single-sided adhesive tape in the circumferential direction of the winding structure relative to the edge of the end portion region is the same as or different from a protruding length of the second single-sided adhesive tape in the circumferential direction of the winding structure relative to the edge of the end portion region.

By bonding the first single-sided adhesive tape and the second single-sided adhesive tape to the first separator segment and the second separator segment, respectively, the dispersion effect of the shear stress at the inner side and the outer side of the end portion region can be realized through the first single-sided adhesive tape and the second single-sided adhesive tape. Moreover, the burrs at the cut portion of the end portion region are effectively separated from the first separator segment and the second separator segment through the first single-sided adhesive tape and the second single-sided adhesive tape. In this way, the risk of the burrs piercing the separator segment to be in lap joint with the electrode plate having another polarity to cause the short circuit is lowered. In addition, the protruding length of the first single-sided adhesive tape in the circumferential direction of the winding structure relative to the edge of the end portion region is the same as the protruding length of the second single-sided adhesive tape in the circumferential direction of the winding structure relative to the edge of the end portion region. In this way, the dispersion effect of the shear stress at the inner side and the outer side of the end portion region can be made more uniform.

The protruding length of the first single-sided adhesive tape in the circumferential direction of the winding structure relative to the edge of the end portion region is different from the protruding length of the second single-sided adhesive tape in the circumferential direction of the winding structure relative to the edge of the end portion region. In this way, steps with gradually varied thicknesses can be caused to be formed through a protruding part of the first single-sided adhesive tape, the end portion region, and a protruding part of the second single-sided adhesive tape. The steps can effectively lower the shear stress. In addition, in conjunction with flexibility of the first single-sided adhesive tape and the second single-sided adhesive tape, the steps can more effectively reduce the risk of the fracture of the electrode plate under the action of shear force.

In some embodiments, the flexible interlayer includes a first single-sided adhesive tape bonded to each of an inner side surface and an outer side surface of the end portion region in a folding manner.

The first single-sided adhesive tape is folded to form two bonding surfaces facing towards each other and two non-bonding surfaces opposite to each other. The two bonding surfaces are used to be bonded to the inner side surface and the outer side surface of the end portion region, respectively. The two non-bonding surfaces are utilized to realize the slidable contact with the separator segments at the inner side and the outer side of the end portion region. Moreover, the cut portion of the end portion region is closed by using the folding region. In this way, a risk of the burrs of the cut portion piercing or scratching the separator to cause a lap joint and short circuit is prevented.

In some embodiments, the flexible interlayer includes a first single-sided adhesive tape and a second single-sided adhesive tape that are bonded to an inner side surface and an outer side surface of the end portion region, respectively; and a protruding length of the first single-sided adhesive tape in the circumferential direction of the winding structure relative to the edge of the end portion region is the same as or different from a protruding length of the second single-sided adhesive tape in the circumferential direction of the winding structure relative to the edge of the end portion region.

The bonding of the inner side surface and the outer side surface of the end portion region is performed by the first single-sided adhesive tape and the second single-sided adhesive tape that have the bonding surfaces facing towards each other. The cut portion of the end portion region is closed through mutual bonding of protruding segments having the same protruding length or different protruding lengths of the first single-sided adhesive tape and the second single-sided adhesive tape relative to the edge of the end portion region. In this way, the risk of the burrs of the cut portion piercing or scratching the separator to cause a lap joint and short circuit is prevented. Moreover, process difficulty of a bonding manner of the first single-sided adhesive tape and the second single-sided adhesive tape is low.

In some embodiments, the first electrode plate is a negative electrode plate; and the second electrode plate is a positive electrode plate.

In some embodiments, in the winding structure, an electrode plate layer, where a first tail end of the first electrode plate in the winding direction is located, is located at an outer side of an electrode plate layer where a second tail end of the second electrode plate in the winding direction is located; the first tail end protrudes in the circumferential direction of the winding structure relative to the second tail end; the flexible interlayer is located between an end portion region of the electrode plate layer where the first tail end is located and a separator segment of the separator that is adjacent to the end portion region of the electrode plate layer where the first tail end is located; and the flexible interlayer is located between an end portion region of the electrode plate layer where the second tail end is located and a separator segment of the separator that is adjacent to the end portion region of the electrode plate layer where the second tail end is located.

The electrode plate layer where the first tail end of the first electrode plate is located is located at the outer side of the electrode plate layer where the second tail end of the second electrode plate is located. Moreover, the first tail end protrudes relative to the second tail end in the circumferential direction. In this way, a wrapping effect of a negative electrode plate at an outermost layer on a positive electrode plate at the outermost layer can be achieved, to ensure that the negative electrode plate has a sufficient lithium embedding space. Therefore, a possibility of lithium precipitation of the negative electrode plate at the outermost layer is reduced. In this structure, by providing the flexible interlayer at each of the first tail end and the second tail end, shear stress of steps formed by each of the first tail end and the second tail end on the electrode plate can be dispersed during circulation of the electrode assembly. Moreover, the risk of the fracture of the electrode plate under the action of the shear force is lowered. Further, the use reliability of the electrode assembly is improved. Moreover, for the second tail end, the flexible interlayer may separate the burrs of the cut portion of the end portion region of the second tail end from the separator, to prevent the burrs from piercing the separator to be in lap joint with the negative electrode plate to cause the short circuit.

In some embodiments, in the winding structure, an electrode plate layer where a first starting end of the first electrode plate in the winding direction is located is located at an inner side of an electrode plate layer where a second starting end of the second electrode plate in the winding direction is located; the first starting end protrudes in the circumferential direction of the winding structure relative to the second starting end; and the flexible interlayer is located between an end portion region of the electrode plate layer where the second starting end is located and a separator segment of the separator that is adj acent to the end portion region of the electrode plate layer where the second starting end is located.

The electrode plate layer where the first starting end of the first electrode plate is located is located at the inner side of the electrode plate layer where the second starting end of the second electrode plate is located. Moreover, the first starting end protrudes relative to the second starting end in the circumferential direction. In this way, it can be ensured that the negative electrode plate has a sufficient lithium embedding space. As a result, a possibility of lithium precipitation of a negative electrode plate at an innermost layer is reduced. In this structure, by providing the flexible interlayer in the end portion region of the electrode plate layer where the second starting end is located, the shear stress of step formed by the second starting end on the electrode plate can be dispersed during the circulation of the electrode assembly. Therefore, the risk of the fracture of the electrode plate under the action of the shear force is lowered. Further, the use reliability of the electrode assembly is improved. Since the electrode assembly is loosely wound at its center, the negative electrode plate here may be empty-rolled for several turns. In this way, the first starting end does not need to have the flexible interlayer. Moreover, there is no need to concern that the burrs of the cut portion of the end portion region of the first starting end will pierce the separator to be in lap joint with the positive electrode plate to cause the short circuit.

In some embodiments, the at least one of the first electrode plate and the second electrode plate includes: a current collector substrate; and an active material layer at least disposed at a surface of a side of the current collector substrate close to the separator.

In the winding direction, a surface part of at least one end of the current collector substrate corresponding to the end portion region is uncovered by the active material layer.

The part of the current collector substrate of the electrode plate corresponding to the end portion region is uncovered by the active material layer. In this way, a height of the step in the end portion region can be lowered no matter whether the flexible interlayer is located in the end portion region. Therefore, shear stress caused by the step during cyclic expansion of the electrode assembly is lowered. Further, the risk of the fracture of the electrode plate under the action of the shear force is lowered. Furthermore, the use reliability of the electrode assembly is improved.

In some embodiments, the winding structure is a cylindrical winding structure; and a length L of the flexible interlayer in the winding direction satisfies: $0.03 * \pi * D \leq L \leq 0.25 \pi * D$, where D represents a diameter of the cylindrical winding structure.

By making the length L greater than or equal to $0.03\pi$ times the diameter D and smaller than or equal to $0.25\pi$ times the diameter D, bonding and fixation between the flexible interlayer and the electrode plate or the separator can be made reliable. In this way, arrangement difficulty of the flexible interlayer is lowered. Moreover, blocking of the flexible interlayer on a lithium ion diffusion channel can also be reduced. Therefore, the influence of the flexible interlayer on performance of the electrode assembly is lowered.

In some embodiments, the length L satisfies: $0.07\pi * D \leq L \leq 0.13\pi * D$.

By making the length L greater than or equal to $0.07\pi$ times the diameter D and smaller than or equal to $0.13\pi$ times the diameter D, the bonding and fixation between the flexible interlayer and the electrode plate or the separator can be made more reliable. In this way, the arrangement difficulty of the flexible interlayer is further lowered. Moreover, the blocking of the flexible interlayer on the lithium ion diffusion channel can also be effectively reduced. Therefore, the influence of the flexible interlayer on the performance of the electrode assembly is lowered.

In some embodiments, the winding structure is a cylindrical winding structure; and a width W of the flexible interlayer in an extension direction of an axis of the cylindrical winding structure satisfies: $W1 \leq W \leq H$, where W1 represents a width of the end portion region in the extension direction of the axis of the cylindrical winding structure, and H represents a height of the cylindrical winding structure in the axial direction of the cylindrical winding structure.

By making the width W of the flexible interlayer satisfy $W1 \leq W \leq H$, the risk of the fracture of the electrode plate caused by the shear stress when the electrode assembly expands circularly can be lowered. Moreover, an adverse effect on subsequent processes is reduced.

In some embodiments, a protruding length L1 of the flexible interlayer in the circumferential direction of the winding structure relative to the edge of the end portion region satisfies: $(1/4) * L \leq L1 \leq (3/4) * L$, where L represents a length of the flexible interlayer in the winding direction.

By making the protruding length L1 greater than or equal to 1/4 times L and smaller than or equal to 3/4 times L, the flexible interlayer can be allowed to overcome an influence of fluctuations in an actual bonding position of the flexible interlayer effectively. Therefore, the dispersion effect of the flexible interlayer on the shear stress is ensured.

In some embodiments, the protruding length L1 satisfies: $(1/3)*L \leq L1 \leq (2/3)*L$.

By making the protruding length L1 greater than or equal to 1/3 times L and smaller than or equal to 2/3 times L, the flexible interlayer can be allowed to overcome the influence of the fluctuations in the actual bonding position of the flexible interlayer more effectively. Therefore, the dispersion effect of the flexible interlayer on the shear stress is further ensured.

In some embodiments, the flexible interlayer has a thickness T satisfying: $0.07*t \leq T \leq 0.8*t$, where t represents a thickness of one of the first electrode plate and the second electrode plate that is adjacent to the flexible interlayer after primary charging and discharging of the electrode assembly.

By making the thickness T of the flexible interlayer greater than or equal to 0.07 times the thickness t of the electrode plate and smaller than or equal to 0.8 times the thickness t of the electrode plate, the shear stress at the step can be effectively dispersed when the electrode assembly is circularly expanded. Therefore, the risk of the fracture of the electrode plate due to excessive shear stress is lowered.

In some embodiments, the thickness T satisfies: $0.2*t \leq T \leq 0.5*t$.

By making the thickness T of the flexible interlayer greater than or equal to 0.2 times the thickness t of the electrode plate and smaller than or equal to 0.5 times the thickness t of the electrode plate, the shear stress at the step can be more effectively dispersed when the electrode assembly is circularly expanded. Further, the risk of the fracture of the electrode plate due to excessive shear stress is further lowered.

In some embodiments, an electrode plate layer where a first tail end of the first electrode plate in the winding direction is located and an electrode plate layer where a second tail end of the second electrode plate in the winding direction is located are each located at an inner side of a separator layer where a third tail end of the separator in the winding direction is located; the third tail end protrudes in the circumferential direction of the winding structure relative to the first tail end and the second tail end; and the third tail end is bonded and fixed on the electrode assembly through a third single-sided adhesive tape.

By providing the third single-sided adhesive tape at the third tail end of the separator to achieve bonding and fixation, an end fixing effect of the separator can be achieved. Therefore, it is ensured that the wound electrode assembly is not loose.

In some embodiments, the winding structure is a cylindrical winding structure; and a length L2 of the third single-sided adhesive tape in the winding direction satisfies: $0.077\pi*D \leq L2 \leq 1.57\pi*D$, where D represents a diameter of the cylindrical winding structure.

By making the length L2 greater than or equal to $0.07\pi$ times the diameter D and smaller than or equal to $1.5\pi$ times the diameter D, the electrode assembly can be firmly bonded without loosening. Moreover, the entry of the electrode assembly into a housing of the battery cell can be facilitated.

In some embodiments, the length L2 satisfies $0.25\pi*D \leq L2 \leq 1.05\pi*D$.

By making the length L2 greater than or equal to $0.25\pi$ times the diameter D and smaller than or equal to $1.05\pi$ times the diameter D, the electrode assembly can be bonded more firmly without loosening. Moreover, the entry of the electrode assembly into the housing of the battery cell can be further facilitated.

In some embodiments, the length L2 satisfies: $\pi*D < L2 \leq 1.05\pi*D$.

By making the length L2 greater than $\pi$ times the diameter D and smaller than or equal to $1.05\pi$ times the diameter D, the third single-sided adhesive tape can be allowed to slightly overlap with the separator while bonding and fixing the tail end of the separator. In this way, a number of steps formed on the separator by the end portion of the third single-sided adhesive tape is reduced. Therefore, shear stress of step formed by the third single-sided adhesive tape on the electrode plate during the cyclic expansion of the electrode assembly is lowered. In addition, the risk of the fracture of the electrode plate under the action of shear stress is lowered.

In some embodiments, the winding structure is a cylindrical winding structure; and two third single-sided adhesive tapes are provided and are spaced apart from each other in an extension direction of an axis of the cylindrical winding structure.

By providing the two third single-sided adhesive tapes that are spaced apart from each other in the extension direction of the axis, an excessive binding force of the third single-sided adhesive tape to the electrode assembly can be avoided while the bonding and fixing requirements are satisfied. Therefore, elongation of the current collector substrate of the electrode assembly is lowered. Moreover, an amount of adhesive tapes of the third single-sided adhesive tape is also reduced.

In some embodiments, in the extension direction of the axis of the cylindrical winding structure, a minimum distance from one of the two third single-sided adhesive tapes close to a first end of the cylindrical winding structure to the first end is h1; a width of the one of the two third single-sided adhesive tapes close to the first end of the cylindrical winding structure is W2; a minimum distance from one of the two third single-sided adhesive tapes close to a second end of the cylindrical winding structure to the second end is h2; a width of the one of the two third single-sided adhesive tapes close to the second end of the cylindrical winding structure is W3; and h1, W2, h2, and W3 satisfy: $0 \le h1 \le 0.07*H$, $0 \le h2 \le 0.07*H$, $0.05*H \le W2 \le 0.12*H$, and $0.05*H \le W3 \le 0.12*H$, where H represents a height of the cylindrical winding structure in the extension direction of the axis of the cylindrical winding structure.

By making h1 and h2 satisfy $0 \le h1 \le 0.07*H$ and $0 \le h2 \le 0.07*H$, and making W2 and W3 satisfy $0.05*H \le W2 \le 0.12*H$ and $0.05*H \le W3 \le 0.12*H$, the third single-sided adhesive tape can be caused to be mainly pasted in a thinning region of an active material coating at both sides of the electrode plate. In this way, the third single-sided adhesive tape with a greater thickness range can be applicatory. Even if a thick third single-sided adhesive tape is adopted, the entry of the electrode assembly into the housing of the battery cell cannot be easily affected.

In some embodiments, the third single-sided adhesive tape has a thickness T1 satisfying: $5\mu m \le T1 \le 120\mu m$.

When the minimum distance h1, h2 and the width W2 and W3 fall within suitable ranges, by setting the thickness T1 of the third single-sided adhesive tape to satisfy $5\mu m \le T1 \le 120\mu m$, the third single-sided adhesive tape is caused to have a suitable tensile strength. In this way, a risk of the third single-sided adhesive tape fracturing under the action of tensile force when the electrode assembly is circularly expanded is lowered. Moreover, an overall outer contour size of the electrode assembly bonded with the third single-sided adhesive tape is made more appropriate. Therefore, the electrode assembly is prevented from interfering with the housing when entering the housing.

In some embodiments, in the extension direction of the axis of the cylindrical winding structure, a minimum distance from one of the two third single-sided adhesive tapes close to a first end of the cylindrical winding structure to the first end is h1; a width of the one of the two third single-sided adhesive tapes close to the first end of the cylindrical winding structure is W2; a minimum distance from one of the two third single-sided adhesive tapes close to a second end of the cylindrical winding structure to the second end is h2; a width of the one of the two third single-sided adhesive tapes close to the second end of the cylindrical winding structure is W3; and h1, W1, h2, and W2 satisfy: $0.07*H \le h1 \le 0.25*H$, $0.07*H \le h2 \le 0.25*H$, $0.05*H \le W2 \le 0.23*H$, $0.05*H \le W3 \le 0.23*H$, where H represents a height of the cylindrical winding structure in the extension direction of the axis of the cylindrical winding structure.

By making h1 and h2 satisfy $0.07*H \le h1 \le 0.25*H$ and $0.07*H \le h2 \le 0.25*H$, and by making W2 and W3 satisfy $0.05*H \le W2 \le 0.23*H$ and $0.05*H \le W3 \le 0.23*H$, other than in the thinning region of the active material coating at both sides of the electrode plate, the third single-sided adhesive tape can also be caused to be pasted to a region of the active material coating having a normal thickness. Therefore, a third single-sided adhesive tape with a small thickness range can be applicatory. Moreover, a firmness degree of the bonding is improved by increasing a width of the third single-sided adhesive tape, allowing the electrode assembly not to become loosening easily.

In some embodiments, the third single-sided adhesive tape has a thickness T1 satisfying: $5\mu m \le T1 \le 60\mu m$.

When the minimum distances h1 and h2 and the widths W2 and W3 fall within suitable ranges, by setting the thickness T1 of the third single-sided adhesive tape to satisfy $5\mu m \le T1 \le 60\mu m$, the third single-sided adhesive tape is caused to have a suitable tensile strength. In this way, the risk of the third single-sided adhesive tape fracturing under the action of the tensile force when the electrode assembly is circularly expanded is lowered. Moreover, the overall outer contour size of the electrode assembly bonded with the third single-sided adhesive tape is made more appropriate. Therefore, the electrode assembly is prevented from interfering with the housing when entering the housing.

In an aspect of the present disclosure, a battery cell is provided. The battery cell includes the electrode assembly as described above. The battery cell using the electrode assembly described above may achieve better use reliability.

In an aspect of the present disclosure, a battery is provided. The battery includes the battery cell as described above. The battery using the battery cell described above may achieve better use reliability.

In an aspect of the present disclosure, an electric device is provided. The electric device includes the battery as described above. The electric device using the battery described above may achieve better use reliability.

## BRIEF DESCRIPTION OF THE DRAWINGS

In order to clearly explain technical solutions of embodiments of the present disclosure, drawings needing to be used in the embodiments of the present disclosure are briefly described below. Obviously, the drawings as described below are merely some embodiments of the present disclosure. Based on these drawings, other drawings can be obtained by those skilled in the art without creative effort.

The present disclosure may be more clearly understood from the following detailed description, with reference to the accompanying drawings, in which:

FIG. 1 is a schematic structural view according to some embodiments of an electric device of the present disclosure.
FIG. 2A is a schematic exploded view according to some embodiments of a battery of the present disclosure.
FIG. 2B is a schematic exploded view according to some embodiments of a battery cell of the present disclosure.
FIG. 3 is a schematic view of a winding structure according to some embodiments of an electrode assembly of the present disclosure.

FIG. 4A and FIG. 4B are schematic views of an acting force of an end portion region of an electrode plate without a flexible interlayer or an acting force of an end portion region of an electrode plate with a flexible interlayer on an adjacent electrode plate layer during circular expansion of an electrode assembly.

FIG. 5A to FIG. 5G are schematic structural views of arrangement of a flexible interlayer according to some embodiments of an electrode assembly of the present disclosure, respectively.

FIG. 6A is a schematic view of a part of an electrode assembly located at an end portion region in an unfolded state according to some embodiments of the electrode assembly of the present disclosure.

FIG. 6B is a schematic dimension view of FIG. 6A.

FIG. 6C is a schematic view of a cross section AA in FIG. 6A.

FIG. 7A is a schematic structural view of some embodiments of an electrode assembly of the present disclosure.

FIG. 7B is a schematic dimension view of FIG. 7A.

FIG. 7C is a schematic cross-sectional view of a third single-sided adhesive tape in FIG. 7A being pasted to a third tail end of a separator.

It should be understood that dimensions of various parts shown in the drawings are not drawn to scale as an actual proportional relationship. In addition, the same or similar reference numerals denote the same or similar components.

The reference signs are explained as follows:

10: electrode assembly; 10A: current collector substrate; 10B: active material layer; 100: winding structure; 100A: first end; 100B: second end; 11: first electrode plate; 11A: first starting end; 11B: first tail end; 12: second electrode plate; 12A: second starting end; 12B: second tail end; 13: separator; 131: first separator segment; 132: second separator segment; 133: third tail end; 14: flexible interlayer; 14A: bonding surface; 14B: non-bonding surface; 141: first single-sided adhesive tape; 142: second single-sided adhesive tape; 15: end portion region; 16: third single-sided adhesive tape;

20: battery cell; 21: housing; 22: end cover; 23: current collection tray;

30: battery; 31: case body; 32: case cover;

40: vehicle.

## DETAILED DESCRIPTION

Implementations of the present disclosure are described in further detail below in combination with the accompanying drawings and embodiments. The following detailed description of the embodiments and the accompanying drawings are provided to illustrate the principles of the present disclosure and are not intended to limit the scope of the present disclosure, i.e., the present disclosure is not limited to the embodiments described.

In the description of the present disclosure, it should be noted that, unless otherwise clearly described, the term "plurality" refers to more than two. The orientation or the position indicated by technical terms such as "over", "below", "left", "right", "inner", and "outer" is only for the convenience of describing the embodiments of the present disclosure and simplifying the description, rather than indicating or implying that the pointed apparatus or element must have a specific orientation, or be constructed and operated in a specific orientation, and therefore cannot be understood as a limitation of the present disclosure. In addition, the terms "first", "second", "third", and the like are used for descriptive purposes only and are not to be understood as indicating or implying relative importance. "Vertical" is not vertical in the strict sense, but within permeable error limits. "Parallel" is not parallel in the strict sense, but within the permeable error limits.

The orientation words appearing in the following description are directions shown in the drawings and do not limit the specific structure of the present disclosure. In the present disclosure, it should be noted that, unless otherwise clearly specified and limited, terms such as "install", "connect", "couple", and the like should be understood in a broad sense. For example, it may be a fixed connection or a detachable connection or connection as one piece; or a direct connection or an indirect connection through an intermediate. For those of ordinary skill in the art, the specific meaning of the above terms in the present disclosure should be understood according to specific circumstances.

Some implementations of the present disclosure will be described in detail below with reference to the accompanying drawings. Features disclosed in the embodiments described below can be combined with each other without conflicting.

In a winding structure of an electrode assembly, steps are formed by a starting end or a tail end of an electrode plate in a winding direction and an electrode plate layer adjacent to the one end. The steps may form shear stress on the adjacent electrode plate layer during cyclic expansion of an electrode assembly. When the shear stress is great, the electrode plate may be caused to be stressed and to fracture at a position corresponding to the step. Therefore, the electrode assembly is caused to fail, thus impacting use reliability of the electrode assembly.

In view of this, the embodiments of the present disclosure provide an electrode assembly, a battery cell, a battery, and an electric device, which can improve use reliability of the battery.

The electrode assembly of the embodiments of the present disclosure may be applied to various battery cells. The battery cell may include a lithium ion secondary battery, a lithium ion primary battery, a lithium sulphur battery, a sodium lithium ion battery, a sodium ion battery, or a magnesium ion battery, etc., and the embodiments of the present disclosure are not limited thereto. The battery cell may have cylindrical, flat, rectangular, or other shapes, and the embodiments of the present disclosure are not limited thereto. The battery cells are generally divided into three types based on a packaged manner, including a cylindrical battery cell, a square battery cell, and a soft pack battery cell, and the embodiments of the present disclosure are not limited thereto.

The battery cell according to the embodiments of the present disclosure can be applied to various batteries. The battery may be used for supplying power to an electric device such as a vehicle, for example, providing the vehicle with a power supply for operating and controlling or a power supply for driving and steering. The battery may include a housing and a battery module. The housing is configured to provide the battery module with an accommodation space, and the battery module is mounted in the housing. The housing may be made of a metal material. The battery module may include a plurality of battery cells connected in series or in parallel or in series and parallel. The battery cell is the smallest unit that makes up the battery. The battery cell includes an electrode assembly capable of generating an electrochemical reaction.

The battery in the embodiments of the present disclosure may be applied in various electric devices using batteries. The electric device may be a mobile phone, a portable device, a laptop computer, an electric scooter, an electric vehicle, a ship, a spacecraft, an electric toy, an electric tool, and the like. The spacecraft includes an airplane, a rocket, a space shuttle, a spaceship, or the like. The electric toy includes a fixed electric toy or a mobile electric toy, e.g., a game console, an electric car toy, an electric ship toy, and an electric airplane toy. The electric tool includes a metal cutting electric tool, a grinding electric tool, an assembling electric tool, and a railway power tool, e.g., an electric drill, an electric grinding machine, an electric wrench, an electric screwdriver, an electric hammer, an impact electric drill, a concrete vibrator, and an electric planer. In the embodiments of the present disclosure, the above-mentioned electric devices are not particularly limited.

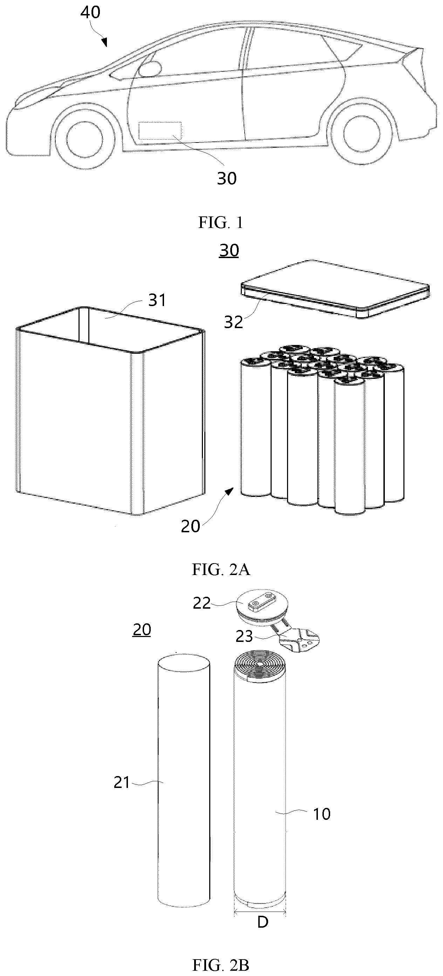

FIG. 1 is a schematic structural view according to some embodiments of an electric device of the present disclosure. For convenience, as an example, an electric device is used as a vehicle for description. The vehicle 40 may be a fuel vehicle, a gas vehicle, or a new energy vehicle. The new energy vehicle may be a battery electric vehicle, a hybrid electric vehicle, or the like. The battery 30 may be provided at a bottom or a head or a tail of the vehicle 40.

The battery 30 may be used for supplying power to the vehicle 40. For example, the battery 30 may act as an operational power supply of the vehicle 40 for an electrical system of the vehicle 40, such as operating power demand for the vehicle 40 during starting, navigation, or in operation. The battery 30 not only can be used as an operational power supply of the vehicle 40, but can also be used as a driving power supply of the vehicle 40, to replace or partially replace fuel or natural gas to provide the vehicle 40 with a driving force.

FIG. 2A is a schematic exploded view according to some embodiments of a battery of the present disclosure. FIG. 2B is a schematic exploded view according to some embodiments of a battery cell of the present disclosure. Referring to FIG. 2A, in some embodiments, the battery 30 includes a case body 31, a case cover 32, and one or more battery cells 20 disposed in the case body 31. While accommodating the battery cell 20, the case body 31 may also provide the battery cell 20 with functions such as cooling, sealing, and anti-collision, and may also avoid adverse effects of liquid or other foreign matters on charging and discharging or safety of the battery cell 20. The case cover 32 may cover an end portion of the case body 31 to close the case body 31. Various battery cells 20 are electrically connected to each other, such as connected to each other in series or in parallel or in series and parallel, so as to achieve required electrical performance parameters of the battery 30. The plurality of battery cells 10 is arranged in rows. One or more rows of battery cells 20 may be provided in the case body as required.

In some embodiments, each battery cell 20 of the battery 30 may be arranged in at least one of a length direction and a width direction of the case body. At least one row or one column of battery cells 20 may be provided as actual needs. One or more layers of battery cells 20 may also be provided in a height direction of the battery 30 as needed.

In some embodiments, the plurality of battery cells 20 may be connected in series or in parallel or in series and parallel to form a battery module. Then, a plurality of battery modules is connected in series or in parallel or in series and parallel again to form a whole, and is accommodated in the case body 31. In some other embodiments, all the battery cells 20 are directly connected in series or in parallel or in series and parallel, and then are integrally accommodated in the case body. An electrode terminal of the battery cell 20 may be electrically connected to an adjacent battery cell 20 through a busbar.

Referring to FIG. 2B, in some embodiments, the battery cell 20 may include a housing 21, an end cover 22, and an electrode assembly 10. The housing 21 has a cavity for accommodating the electrode assembly. Moreover, at least one end of the housing 21 may be configured to be open for disposing the end cover 2. Other than the electrode assembly, the end cover 22, and the housing 21, the battery cell 20 further includes an electrolyte. The battery cell 20 may further include a current collection tray 23. The current collection tray 23 is located between a tab of the electrode assembly and an electrode pole on the end cover, and may be fixedly connected to a flattened tab through welding.

A cavity of the housing 21 may be used for accommodating the electrode assembly 10 and may contain the electrolyte. When the opening of the end portion of the housing 21 is used for allowing the electrode assembly 10 to enter the cavity through the opening of the end portion during mounting of the battery cell. A shape of the housing 21 may be determined based on shapes of one or more electrode assemblies 10 accommodated in the cavity. For example, the housing 21 is in a shape of a hollow cuboid, a hollow cube, or a hollow cylinder. The housing 21 may be made of a metal (e.g., aluminum, aluminum alloy, etc.) or a non-metallic material (plastic) that have a predetermined hardness and strength.

The end cover 22 is disposed at the opening of the end portion of the housing 21 for closing the opening of the end portion. Moreover, the end cover 22 and the housing 21 form a closed cavity for accommodating the electrode assembly 10. The end cover 22 may be made of a metal (e.g., aluminum, aluminum alloy, etc.) or a non-metallic material (plastic) that have a predetermined hardness and strength. The end cover 22 and the housing 21 may be fixedly connected to each other by welding, bonding, or connecting through a connector. Some functional components may be provided on the end cover 22, for example, a pole, a liquid injection mechanism, a pressure relief mechanism, and the like, which are used for being electrically connected to the electrode assembly.

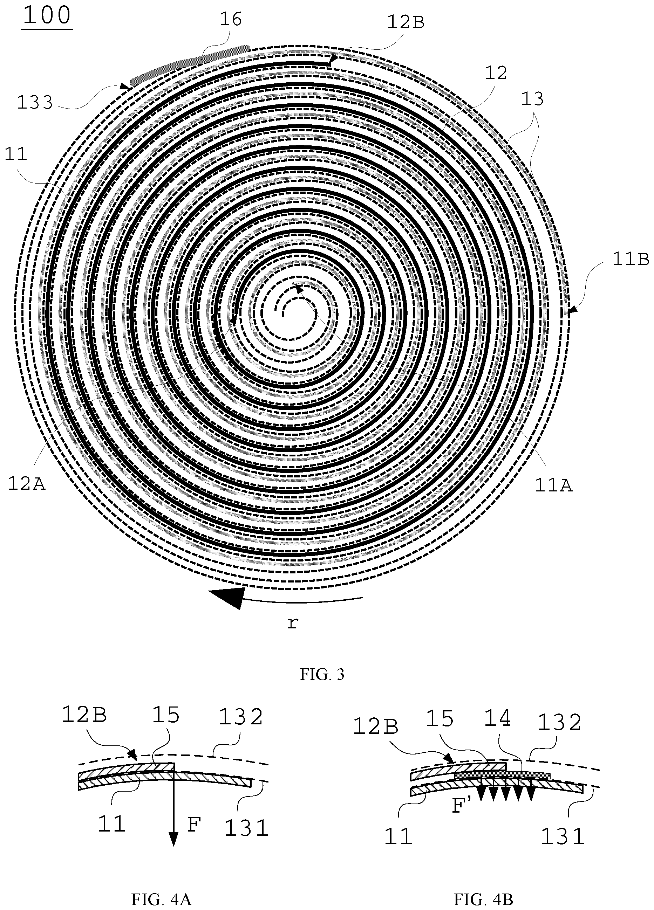

FIG. 3 is a schematic view of a winding structure according to some embodiments of an electrode assembly of the present disclosure. FIG. 4A and FIG. 4B are schematic views of an acting force of an end portion region of an electrode plate without a flexible interlayer or an acting force of an end portion region of an electrode plate with a flexible interlayer on an adjacent electrode plate layer during circular expansion of an electrode assembly. Referring to FIG. 3 and FIG. 4B, the present disclosure provides an electrode assembly 10, which includes: a first electrode plate 11, a second electrode plate 12, and a separator 13 disposed between the first electrode plate 11 and the second electrode plate 12. The first electrode plate 11, the second electrode plate 12, and the separator 13 are wound in a winding direction r and form a winding structure 100.

The first electrode plate 11 has opposite polarity to that of the second electrode plate 12. In some embodiments, the first electrode plate 11 is a negative electrode plate, and the second electrode plate 12 is a positive electrode plate. In some other embodiments, the first electrode plate 11 is a positive electrode plate, and the second electrode plate 12 is a negative electrode plate. Operation of the electrode assembly 10 is implemented through a movement of internal metal ions between the positive electrode plate and the negative electrode plate.

The positive electrode plate includes a positive current collector substrate and a positive active material layer. A positive electrode tab is connected or formed on the positive current collector substrate. Taking a lithium ion battery as an example, the positive current collector substrate may be made of aluminum. The positive active material may be a lithiation material, such as lithium cobalt oxide, lithium iron phosphate, ternary lithium, or lithium manganate, that can provide lithium ions. For a case of using a bonding material to bond the positive current collector substrate and the positive active material layer, the bonding material may be polyvinylidene fluoride (PVDF) and the like.

The negative electrode plate includes a negative current collector substrate and a negative active material layer. A negative tab is connected to or formed on the negative current collector substrate. By taking the lithium ion battery as an example, the negative current collector substrate may be made of copper. The negative active material may be a substance that can store lithium ions such as graphite, silicon, lithium titanate, and the like. For a case of using the bonding material to bond the negative current collector substrate and the negative active material layer, the bonding material may be carboxymethyl cellulose, epoxy resin, butadiene styrene rubber, and the like.

The separator may be made of PP (polypropylene) or PE (polyethylene), etc. The electrolyte includes an electrolyte and a solvent. The electrolyte is an organic metal salt, an inorganic salt, and the like, and may provide metal ions shuttled between the positive electrode plate and the negative electrode plate. In order to ensure sufficient overcurrent capability, a tab corresponding to each layer of positive electrode plate in the winding structure may be flattened and then welded to a current collection tray or a positive pole on the end cover. Moreover, a tab corresponding to each layer of negative electrode plate may be flattened and then welded to the current collection tray or a negative pole on the end cover.

In FIG. 3, the first electrode plate 11 has a first starting end 11A and a first tail end 11B in the winding direction r. The second electrode plate 12 has a second starting end 12A and a second tail end 12B in the winding direction r. In the winding structure 100, one separator 13, the first electrode plate 11, another separator 13, and the second electrode plate 12 are sequentially laminated to each other and then wound in the winding direction r. The two separators 13 may be longer than both the first electrode plate 11 and the second electrode plate 12 in the winding direction r. Correspondingly, an innermost side of the winding structure 100 may be rolled up from the two separators 13 first. Moreover, third tail ends 133 of the two separators 13 are wound at an outermost side of the winding structure 100.

Referring to FIG. 3 and FIG. 4B, a flexible interlayer 14 is provided between an end portion region 15 of at least one end of at least one of the first electrode plate 11 and the second electrode plate 12 in the winding direction r and a separator segment of the separator 13 that is adjacent to the end portion region 15. The flexible interlayer 14 protrudes from an edge of the end portion region 15 in a circumferential direction of the winding structure 100.

In FIG. 3, the end portion region 15 may be at least one of the end portion region 15 of the electrode plate layer where the first starting end 11A of the first electrode plate 11 is located, the end portion region 15 of the electrode plate layer where the first tail end 11B of the first electrode plate 11 is located, the end portion region 15 of the electrode plate layer where the second starting end 12A of the second electrode plate 12 is located, and the end portion region 15 of the electrode plate layer where the second tail end 12B of the second electrode plate 12 is located. For embodiments where an electrode plate with a predetermined length is formed by cutting, the edge of the end portion region 15 is a cut position of the electrode plate.

The separator segment of the separator 13 that is adjacent to the end portion region 15 may be a separator segment on the separator 13 that is located at an inner side of the end portion region 15 or at an outer side of the end portion region 15 and is adjacent to the end portion region. The inner side and the outer side herein are relative to the winding structure 100. A side close to a center of the winding structure 100 is the inner side, and a side facing away from the center of the winding structure 100 is the outer side.

The circumferential direction of the winding structure 100 may be the winding direction r or an opposite direction of the winding direction r. According to a position where the end portion region 15 is located, directions of the flexible interlayer 14 protruding relative to the edge of the end portion region 15 may be different. For example, when the flexible interlayer 14 is provided in the end portion region 15 of the first starting end 11A or in the end portion region 15 of the second starting end 12B, the flexible interlayer 14 protrudes relative to the edge of the end portion region 15 in the opposite direction of the winding direction r. The flexible interlayer 14 protrudes relative to the edge of the end portion region 15 in the winding direction r when the flexible interlayer 14 is provided in the end portion region 15 of the electrode plate layer where the first tail end 11B is located or the end portion region 15 of the electrode plate layer where the second tail end 12B is located.

The separator segment of the separator 13 that is adjacent to the end portion region 15 may be a separator segment of the separator 13 that is located at the inner side of the end portion region 15 and adjacent to the end portion region 15 or a separator segment of the separator 13 that is located at the outer side of the end portion region 15 and adjacent to the end portion region 15. Accordingly, the flexible interlayer 14 may be located between the end portion region 15 and the separator segment at the inner side or located between the end portion region 15 and the separator segment at the outer side.

For ease of description, a position where the second tail end 12B of the second electrode plate 12 is located is selected. In FIG. 4A, the flexible interlayer 14 is not provided between the end portion region 15 of the electrode plate layer where the second tail end 12B is located and the separator segment at the inner side of the end portion region 15. In FIG. 4B, the flexible interlayer 14 is provided between the end portion region 15 of the electrode plate layer where the second tail end 12B is located and the separator segment at the inner side of the second tail end 12B.

As can be seen from FIG. 4A and FIG. 4B, in the winding structure 100, a step is formed by the end portion region 15 of the electrode plate layer where the second tail end 12B of the second electrode plate 12 in the winding direction r is located and an electrode plate layer of a first electrode plate 11 at the inner side of the second tail end 12B. The step may form shear stress on the electrode plate layer at the inner side when the electrode assembly 10 is circularly expanded. An edge of the step in FIG. 4A forms a concentrated shear stress F when an electrode plate layer at an inner side is circularly expanded. Since the shear stress F is concentrated, fracture of the electrode plate layer at the inner side under the shear force is easily caused.

The flexible interlayer 14 in FIG. 4B may deform under the action of an external force. In this way, concentrated shear stress formed by the step can be dispersed through the flexible interlayer 14. It can be seen that shear stress F' is dispersed within a greater range. Correspondingly, the shear stress F' is obviously smaller than the shear stress F when the flexible interlayer 14 is not provided. Therefore, the risk of the fracture of the electrode plate under the action of shear force is lowered. Further, use reliability of the electrode assembly 10 is improved.

For the embodiments where the electrode plate having a predetermined length is formed by cutting, the edge of the end portion region 15 is the cut position of the electrode plate. The flexible interlayer 14 may separate burrs at a cut portion of the end portion region 15 from the separator 13, so as to prevent the burrs from piercing the separator 13 to be in lap joint with an electrode plate having another polarity to cause short circuit. Therefore, use safety of the electrode assembly 10 is improved. Accordingly, a thickness of the flexible interlayer 14 is greater than a height of the burrs, so as to prevent the burrs from piercing the flexible interlayer 14 and then piercing the separator 13.

In the above embodiments, one of the end portion region 15 and the separator segment may be bonded to the flexible interlayer 14, and another one of the end portion region 15 and the separator segment may be in slidable contact with the flexible interlayer 14. For example, the end portion region 15 is bonded to the flexible interlayer 14, and the separator segment is in slidable contact with the flexible interlayer 14. For another example, the separator segment is bonded to the flexible interlayer 14, and the end portion region 15 is in slidable contact with the flexible interlayer 14.

Relative fixation between one of the end portion region 15 and the separator segment and the flexible interlayer 14 is realized by bonding, such that the flexible interlayer 14 can be kept in a region where the step is located, thereby ensuring an effective dispersion effect on the shear stress. By allowing another one of the end portion region 15 and the separator segment to be in slidable contact with the flexible interlayer 14, the phenomenon that the separator 13 is wrinkled because the end portion region 15, the separator segment, and the flexible interlayer 14 are bonded together is avoided.

In order to provide the flexible interlayer more conveniently, in some embodiments, the flexible interlayer 14 may include at least one single-sided adhesive tape. A bonding effect is achieved through a bonding surface 14A of the single-sided adhesive tape. Slidable contact of the single-sided adhesive tape with a surface of the end portion region 15 or a surface of the separator segment is achieved through a non-bonding surface 14B. In other embodiments, the flexible interlayer 14 may also be a film layer coated on the surface of the end portion region 15 or the surface of the separator segment.

The single-sided adhesive tape may include an adhesive tape substrate and an adhesive coating disposed at a side surface of the adhesive tape substrate. The adhesive coating may be used as the bonding surface 14A, and another side surface of the adhesive tape substrate may be used as the non-bonding surface 14B. The adhesive tape substrate may be made of materials including polypropylene (PP), polyethylene terephthalate (PET), polyimide (PI), and the like. The adhesive coating may be made of materials including acrylic glue (i.e., PMMA glue) and the like.

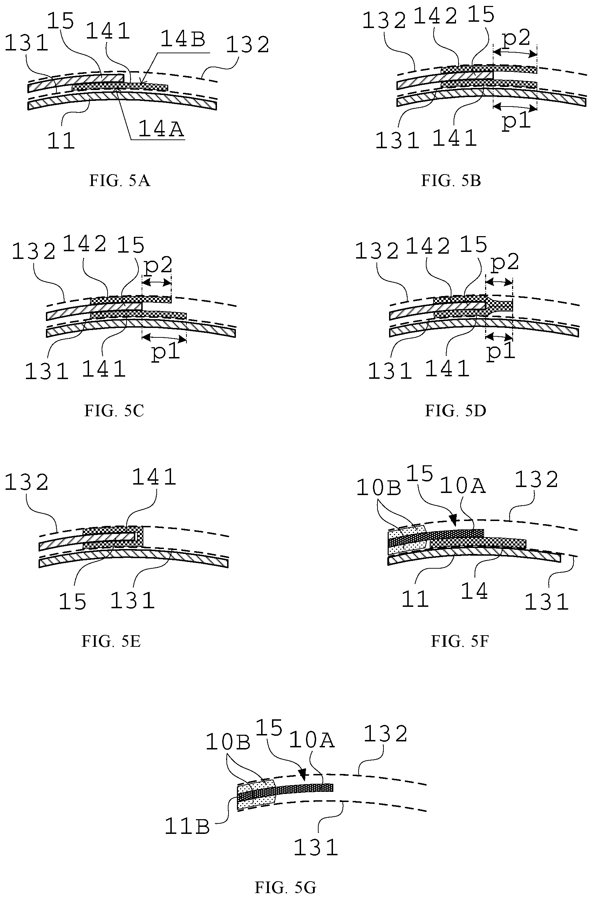

FIG. 5A to FIG. 5G are schematic structural views of arrangement of a flexible interlayer according to some embodiments of an electrode assembly of the present disclosure, respectively. Referring to FIG. 5A, in some embodiments, the separator segment includes a first separator segment 131 and a second separator segment 132. The first separator segment 131 is located at an inner side of the end portion region 15. The second separator segment 132 is located at an outer side of the end portion region 15. The flexible interlayer 14 includes a first single-sided adhesive tape 141 bonded to one of the first separator segment 131 and the second separator segment 132.

A side of the end portion region 15 has the first single-sided adhesive tape 141 bonded to the separator segment at the side of the end portion region. A dispersion effect of the shear stress of the end portion region 15 of the electrode plate on an electrode plate at the inner side or the outer side of the end portion region can be realized through the first single-sided adhesive tape 141. Moreover, the burrs at the cut portion of the end portion region 15 can also be separated from the separator segment at the side through the first single-sided adhesive tape 141. Therefore, a risk of the burrs piercing the separator segment to be in lap joint with an electrode plate having another polarity to cause the short circuit is prevented.

Since the bonding surface 14A of the first single-sided adhesive tape 141 is bonded to a surface of the separator segment at a side of the end portion region 15, the non-bonding surface 14B of the first single-sided adhesive tape 141 is not bonded to a surface of the separator segment at another side of the end portion region 15. In this way, it can be avoided that the separator 13 is wrinkled during winding caused by bonding of the first single-sided adhesive tape 141 to the two separators 13 after the first single-sided adhesive tape 141 is provided, resulting in poor states such as lithium precipitation. As illustrated in FIG. 5A, for a case where the first electrode plate 11 is located at the inner side of the second tail end 12B and where there is no first electrode plate 11 and only the separator 13 at the outer side of the second tail end 12B, only the first single-sided adhesive tape 141 may be provided at the inner side of the end portion region 15 of the electrode plate layer where the second tail end 12B is located. In this way, a step of providing the single-sided adhesive tape at both sides of the end portion region 15 may be saved.

Referring to FIG. 5B and FIG. 5C, in some embodiments, the flexible interlayer 14 includes a first single-sided adhesive tape 141 bonded to the first separator segment 131 and a second single-sided adhesive tape 142 bonded to the second separator segment 132. By bonding the first single-sided adhesive tape 141 and the second single-sided adhesive tape 142 to the first separator segment 131 and the second separator segment 132, respectively, the dispersion effect of the shear stress at the inner side and the outer side of the end portion region 15 can be realized through the first single-sided adhesive tape 141 and the second single-sided adhesive tape 142. Moreover, the burrs at the cut portion of the end portion region 15 can be effectively caused to be separated from the first separator segment 131 and the second separator segment 132. Therefore, the risk of the burrs piercing the separator segment to be in lap joint with the electrode plate with another polarity to cause the short circuit is lowered.

In FIG. 5B, a protruding length p1 of the first single-sided adhesive tape 141 in the circumferential direction of the winding structure 100 relative to the edge of the end portion region 15 is the same as a protruding length p2 of the second single-sided adhesive tape 142 in the circumferential direction of the winding structure 100 relative to the edge of the end portion region 15. The protruding length herein refers to a protruding length of each of the first single-sided adhesive tape 141 and the second single-sided adhesive tape 142 when the first single-sided adhesive tape 141 and the second single-sided adhesive tape 142 are each flattened.

By making the protruding length of the first single-sided adhesive tape 141 in the circumferential direction of the winding structure 100 relative to the edge of the end portion region 15 be the same as the protruding length of the second single-sided adhesive tape 142 in the circumferential direction of the winding structure 100 relative to the edge of the end portion region 15, the dispersion effect of the shear stress at the inner side and the outer side of the end portion region 15 can be made more uniform.

In FIG. 5C, the protruding length of the first single-sided adhesive tape 141 in the circumferential direction of the winding structure 100 relative to the edge of the end portion region 15 may also be different from the protruding length of the second single-sided adhesive tape 142 in the circumferential direction of the winding structure 100 relative to the edge of the end portion region 15. The protruding length herein refers to the protruding length of each of the first single-sided adhesive tape 141 and the second single-sided adhesive tape 142 when the first single-sided adhesive tape 141 and the second single-sided adhesive tape 142 are flattened.

The protruding length of the first single-sided adhesive tape 141 in the circumferential direction of the winding structure 100 relative to the edge of the end portion region 15 is different from the protruding length of the second single-sided adhesive tape 142 in the circumferential direction of the winding structure 100 relative to the edge of the end portion region 15. In this way, a protruding part of the first single-sided adhesive tape 141, the end portion region 15, and a protruding part of the second single-sided adhesive tape 142 form steps with gradually varied thicknesses. The steps can effectively reduce the shear stress. By cooperating with flexibility of the first single-sided adhesive tape 141 and the second single-sided adhesive tape 142, the steps can more effectively reduce the risk of the fracture of the electrode plate under the action of shear force.

Referring to FIG. 5D, in some embodiments, the flexible interlayer 14 includes a first single-sided adhesive tape 141 and a second single-sided adhesive tape 142 that are bonded to an inner side surface and an outer side surface of the end portion region 15, respectively. A protruding length of the first single-sided adhesive tape 141 in the circumferential direction of the winding structure 100 relative to the edge of the end portion region 15 is the same as or different from a protruding length of the second single-sided adhesive tape 142 in the circumferential direction of the winding structure 100 relative to the edge of the end portion region 15. The protruding length herein refers to the protruding length of each of the first single-sided adhesive tape 141 and the second single-sided adhesive tape 142 when the first single-sided adhesive tape 141 and the second single-sided adhesive tape 142 are flattened.

The bonding of the inner side surface and the outer side surface of the end portion region 15 is performed by the first single-sided adhesive tape 141 and the second single-sided adhesive tape 142 that have the bonding surfaces 14A facing towards each other. The cut portion of the end portion region 15 is closed through mutual bonding of protruding segments having the same protruding length or different protruding lengths of the first single-sided adhesive tape 141 and the second single-sided adhesive tape 142 relative to the edge of the end portion region 15. In this way, the risk of the cut portion piercing or scratching the separator 13 to cause the lap joint and short circuit is prevented. Moreover, process difficulty of a bonding manner of the first single-sided adhesive tape 141 and the second single-sided adhesive tape 142 is low.

Referring to FIG. 5E, in some embodiments, the flexible interlayer 14 includes a first single-sided adhesive tape 141 bonded to each of an inner side surface and an outer side surface of the end portion region 15 in a folding manner. The first single-sided adhesive tape 141 may be folded to form two bonding surfaces 14A facing towards each other and two non-bonding surfaces 14B opposite to each other. The two bonding surfaces 14A are bonded to the inner side surface and the outer side surface of the end portion region 15, respectively. The slidable contact of the two non-bonding surfaces 14B with the separator segments at the inner side and the outer side of the end portion region 15 is realized. Moreover, the cut portion of the end portion region 15 is closed by using the folding region. In this way, a risk of the burrs of the cut portion piercing or scratching the separator to cause a lap joint and short circuit is prevented.

Referring to FIG. 3, in the above embodiments, the first electrode plate 11 may be the negative electrode plate, and the second electrode plate 12 may be the positive electrode plate. In the winding structure 100, the electrode plate layer where the first tail end 11B of the first electrode plate 11 in the winding direction r is located may be located at the outer side of the electrode plate layer where the second tail end 12B of the second electrode plate 12 in the winding direction r is located. Moreover, the first tail end 11B protrudes relative to the second tail end 12B in the circumferential direction of the winding structure 100.

The electrode plate layer where the first tail end 11B of the first electrode plate 11 is located is located at the outer side of the electrode plate layer where the second tail end 12B of the second electrode plate 12 is located. Moreover, the first tail end 11B is allowed to protrude in the circumferential direction relative to the second tail end 12B. In this way, a wrapping effect of a negative electrode plate at an outermost layer on a positive electrode plate at the outermost layer can be achieved, to ensure that the negative electrode plate has a sufficient lithium embedding space. Therefore, a possibility of lithium precipitation of the negative electrode plate at the outermost layer is reduced.

The flexible interlayer 14 is provided between the end portion region 15 of the electrode plate layer where the first tail end 11B is located and the separator segment of the separator 13 that is adjacent to the end portion region 15 of the electrode plate layer where the first tail end 11B is located. The flexible interlayer 14 is provided between the end portion region 15 of the electrode plate layer where the second tail end 12B is located and the separator segment of the separator 13 that is adjacent to the end portion region 15 of the electrode plate layer where the second tail end 12B is located.

In this structure, by providing the flexible interlayer 14 at each of the first tail end 11B and the second tail end 12B, shear stress of steps formed by each of the first tail end 11B and the second tail end 12B on the electrode plate can be dispersed during circulation of the electrode assembly 10. Moreover, the risk of the fracture of the electrode plate under the action of the shear force is lowered. Further, the use reliability of the electrode assembly 10 is improved. Moreover, for the second tail end 12B, the flexible interlayer 14 may separate the burrs of the cut portion of the end portion region of the second tail end 12B from the separator 13, to prevent the burrs from piercing the separator 13 to be in lap joint with the negative electrode plate to cause the short circuit.

Still referring to FIG. 3, in a winding structure 100 of the foregoing embodiment with the first electrode plate 11 as the negative electrode plate and the second electrode plate 12 as the positive electrode plate, an electrode plate layer where a first starting end 11A of the first electrode plate 11 in the winding direction r is located is located at an inner side of an electrode plate layer where a second starting end 12A of the second electrode plate 12 in the winding direction r is located. Moreover, the first starting end 11A protrudes in the circumferential direction of the winding structure 100 relative to the second starting end 12A. The electrode plate layer where the first starting end 11A of the first electrode plate 11 is located is located at the inner side of the electrode plate layer where the second starting end 12A of the second electrode plate 12 is located. Moreover, the first starting end 11A protrudes in the circumferential direction relative to the second starting end 12A. In this way, it can be ensured that the negative electrode plate has the sufficient lithium embedding space, thereby reducing the possibility of lithium precipitation of the negative electrode plate at the innermost layer.

The flexible interlayer 14 is located between an end portion region 15 of the electrode plate layer where the second starting end 12A is located and a separator segment of the separator 13 that is adjacent to the end portion region 15 of the electrode plate layer where the second starting end 12A is located. In this structure, by providing the flexible interlayer 14 at the second starting end 12A, the shear stress of step formed by the second starting end 12A on the electrode plate can be dispersed during the circulation of the electrode assembly 10. Therefore, the risk of the fracture of the electrode plate under the action of the shear force is lowered. Further, the use reliability of the electrode assembly 10 is improved. Since the electrode assembly 10 is loosely wound at its center, the negative electrode plate here may be empty-rolled for several turns. In this way, the first starting end 11A does not need to have the flexible interlayer 14. Moreover, there is no need to concern that the burrs of the cut portion of the end portion region 11A of the first starting end 11A will pierce the separator 13 to be in lap joint with the positive electrode plate to cause the short circuit.

Referring to FIG. 5F and FIG. 5G, in some embodiments, at least one of the first electrode plate 11 and the second electrode plate 12 includes: a current collector substrate 10A and an active material layer 10B. The active material layer 10B is at least disposed at a surface of a side of the current collector substrate 10A close to the separator 13. The current collector substrate 10A and the active material layer 10B in the positive electrode plate are a positive current collector substrate and a positive active material layer, respectively. The current collector substrate 10A and the active material layer 10B in the negative electrode plate are a negative current collector substrate and a negative active material layer, respectively.

In the winding direction r, a surface part of at least one end of the current collector substrate 10A corresponding to the end portion region 15 is uncovered by the active material layer 10B. In FIG. 5F, the flexible interlayer 14 may be located on the end portion region 15 corresponding to the surface part of the current collector substrate 10A that is uncovered by the active material layer 10B. Compared with the flexible interlayer 14 located on the active material layer 10B, a height of the step formed at the end portion region 15 is lowered. Moreover, the structure shown in FIG. 5F further forms a multilevel step structure where the active material layer 10B, the current collector substrate 10A, and the flexible interlayer 14 sequentially change.

The part of the current collector substrate 10A of the electrode plate corresponding to the end portion region 15 is uncovered by the active material layer 10B. In this way, a height of the step in the end portion region 15 can be lowered no matter whether the flexible interlayer 14 is located in the end portion region 15. Therefore, shear stress caused by the step during cyclic expansion of the electrode assembly 10 is lowered. Further, the risk of the fracture of the electrode plate under the action of the shear force is lowered. Furthermore, the use reliability of the electrode assembly 10 is improved.

The flexible interlayer 14 may be provided at respective starting ends and tail ends of the first electrode plate 11 and the second electrode plate 12. The flexible interlayer 14 may also be provided at some of the respective starting ends and tail ends of the first electrode plate 11 and the second electrode plate 12. For the first tail end 11B in FIG. 3, a layer adjacent to the inner side of the first tail end 11B is still an electrode plate layer inside the first tail end 11B. Moreover, the flexible interlayer 14 may not be provided here, but a lower height of the step may be formed through the part of the current collector substrate 10A corresponding to the end portion region 15 that is uncovered by the active material layer 10B shown in FIG. 5G. In this way, the shear stress caused by the steps when the electrode assembly 10 is circularly expanded is lowered. Therefore, the risk of the fracture of the electrode plate under the action of the shear force is lowered. Further, the use reliability of the electrode assembly 10 is improved.

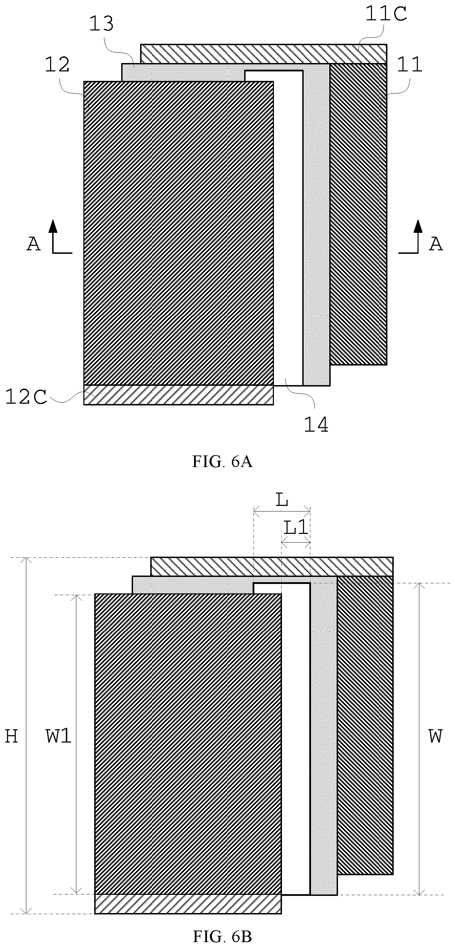

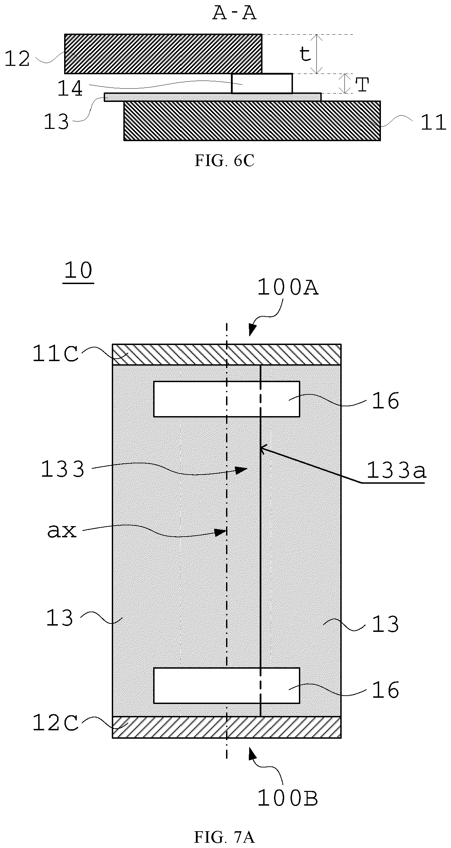

FIG. 6A is a schematic view of a part of an electrode assembly located at an end portion region in an unfolded state according to some embodiments of the electrode assembly of the present disclosure. FIG. 6B is a schematic dimension view of FIG. 6A. FIG. 6C is a schematic view of a cross section AA in FIG. 6A. Referring to FIG. 2B, FIG. 6A, and FIG. 6B, in some embodiments, the winding structure 100 is a cylindrical winding structure; and a length L of the flexible interlayer 14 in the winding direction r satisfies: $0.03\pi*D \leq L \leq 0.25\pi*D$, where D represents a diameter of the cylindrical winding structure.

The flexible interlayer 14 located between the electrode plate and the separator 13 may block a part of area of the lithium ion diffusion channel. When the length L of the flexible interlayer 14 in the winding direction r is too large compared with a perimeter $\pi*D$ of a cross section of the cylindrical winding structure, the influence on the lithium ion diffusion is significant, thereby affecting the performance of the electrode assembly 10.

Compared with the perimeter $\pi*D$ of the cross section of the cylindrical winding structure, the length L is too small, such that the bonding and fixing effect between the flexible interlayer 14 and the electrode plate or the separator 13 becomes weak. In this way, the flexible interlayer 14 is easily caused to be detached from the arrangement position. In addition, it is difficult to set the too small length L when the electrode assembly 10 is manufactured, resulting in an increase in manufacturing difficulty of the electrode assembly 10.

Therefore, by making the length L greater than or equal to $0.03\pi$ times the diameter D and smaller than or equal to $0.25\pi$ times the diameter D, the bonding and fixation between the flexible interlayer 14 and the electrode plate or the separator 13 may be allowed to be reliable. In this way, arrangement difficulty of the flexible interlayer 14 is lowered. Moreover, blocking of the flexible interlayer 14 on the lithium ion diffusion channel can also be reduced. Therefore, the influence of the flexible interlayer on performance of the electrode assembly 10 is lowered.

In some embodiments, the length L satisfies: $0.07\pi*D\leq L\leq0.13\pi*D$. For example, L is equal to $0.09\pi*D$, $0.1\pi*D$, $0.12\pi*D$, and the like. By making the length L greater than or equal to $0.07\pi$ times the diameter D and smaller than or equal to $0.13\pi$ times the diameter D, the bonding and fixing between the flexible interlayer 14 and the electrode plate or the separator 13 can be more reliable. Moreover, the arrangement difficulty of the flexible interlayer 14 is further reduced. In addition, the blocking of the flexible interlayer 14 on the lithium ion diffusion channel can also be effectively reduced. Therefore, the influence of the flexible interlayer 14 on the performance of the electrode assembly 10 is lowered.

The technical effects of taking different lengths L and thicknesses D are described by several experimental examples and comparative examples shown in the following table.

| Diameter D(mm) | Length L(mm) | L/($\pi*D$) | Effect |
| --- | --- | --- | --- |
| 90 | 10 | 0.0354 | Flexible interlayer is not loosened |
| 90 | 35 | 0.1238 | Flexible interlayer is not loosened |
| 120 | 10 | 0.0265 | Flexible interlayer is loosened |
| 120 | 35 | 0.0928 | Flexible interlayer is not loosened |

Referring to FIG. 6B, in some embodiments, the winding structure 100 is a cylindrical winding structure; and a width W of the flexible interlayer 14 in an extension direction of an axis ax of the cylindrical winding structure satisfies: $W1\leq W\leq H$, where W1 represents a width of the end portion region 15 in the extension direction of the axis ax of the cylindrical winding structure, and H represents a height of the cylindrical winding structure in the extension direction of the axis ax of the cylindrical winding structure. The height H of the cylindrical winding structure may be a maximum distance from a tab surface at an end of the cylindrical winding structure (i.e., an end surface after the tab at the side is flattened) to a tab surface at another end (i.e., an end surface after the tab at the side is flattened) in the extension direction of the axis of the cylindrical winding structure.

When the width W of the flexible interlayer 14 is smaller than the width W1 of the end portion region 15, parts uncovered by the flexible interlayer 14 occur between the end portion region 15 of the electrode plate and the separator 13. These parts have the risk of fracture of the electrode plate caused by excessive shear stress because shear stress at these parts is not dispersed through the flexible interlayer 14.

When the width W of the flexible interlayer 14 is greater than the height H of the cylindrical winding structure 100, the flexible interlayer 14 protrudes from the tab located at the end portion of the cylindrical winding structure 100 due to its excessive length, which affects subsequent processes of smoothing and welding of the tab. In order to avoid affecting the subsequent processes, a process of removing an overlong part of the flexible interlayer 14 is also required. Therefore, manufacturing steps are added, and a manufacturing cost is improved.

Therefore, by making the width W of the flexible interlayer 14 satisfy $W1\leq W\leq H$, the risk of the fracture of the electrode plate caused by the shear stress when the electrode assembly 10 expands circularly can be lowered. Moreover, an adverse effect on subsequent processes is reduced.

Still referring to FIG. 6B, in some embodiments, a protruding length L1 of the flexible interlayer 14 in the circumferential direction of the winding structure 100 relative to the edge of the end portion region 15 satisfies: $(1/4)*L\leq L1\leq(3/4)*L$, where L represents a length of the flexible interlayer 14 in the winding direction r.

A relationship between the protruding length L1 of the flexible interlayer 14 and the length L of the flexible interlayer 14 reflects a position of the flexible interlayer 14 relative to the edge of the end portion region 15. When the protruding length L1 is too small or too large than the length L, due to the fluctuations in the actual bonding position of the flexible interlayer 14, the flexible interlayer 14 is easily caused not to be accurately located at a suitable position between the end portion region 15 of the electrode plate and the separator 13.

When none of the flexible interlayers 14 or only a few parts of the flexible interlayers 14 are located between the end portion region 15 of the electrode plate and the separator 13, or the flexible interlayer 14 does not protrude in the circumferential direction of the electrode assembly 10 relative to the edge of the end portion region 15, the flexible interlayer 14 is difficult to disperse the shear stress effectively.

Therefore, by making the protruding length L1 greater than or equal to 1/4 times L and smaller than or equal to 3/4 times L, the flexible interlayer 14 can be caused to effectively overcome the influence of the fluctuations in the actual bonding position of the flexible interlayer 14, thereby ensuring its dispersion effect on the shear stress.

In some embodiments, the protruding length L1 satisfies: $(1/3)*L \le L1 \le (2/3)*L$. For example, L1 is equal to $(3/8)*L$, $(1/2)*L$, and the like. By making the protruding length L1 greater than or equal to 1/3 times L and smaller than or equal to 2/3 times L, the flexible interlayer 14 can be caused to overcome the influence of the fluctuations in the actual bonding position of the flexible interlayer 14 more effectively. Moreover, the dispersion effect of the flexible interlayer 14 on the shear stress is further ensured.

Referring to FIG. 6C, in some embodiments, the flexible interlayer 14 has a thickness T satisfying: $0.07*t \le T \le 0.8*t$, where t represents a thickness of one of the first electrode plate 11 and the second electrode plate 12 that is adjacent to the flexible interlayer 14 after primary charging and discharging of the electrode assembly 10.

When the electrode assembly 10 is circularly expanded, the flexible interlayer 14 can disperse the shear stress of the step formed at the end portion of the electrode plate to the adjacent electrode plate layer, thereby reducing the risk of fracture. However, the height of the step of the end portion region 15 relative to the adjacent electrode plate layer also increases after the flexible interlayer 14 is provided.

Compared with the thickness t of the electrode plate, when the thickness T of the flexible interlayer 14 is too small, an overthin flexible interlayer 14 is difficult to effectively disperse the shear stress at the step, thereby increasing the risk of the fracture of the electrode plate. When the thickness T of the flexible interlayer 14 is too greater than the thickness t of the electrode plate, the end portion region 15 forms a higher step after having the thick flexible interlayer 14, which in turn results in an increase in shear stress at the step.

Therefore, by making the thickness T of the flexible interlayer 14 greater than or equal to 0.07 times the thickness t of the electrode plate and smaller than or equal to 0.8 times the thickness t of the electrode plate, the shear stress at the step can be dispersed effectively when the electrode assembly 10 is circularly expanded. Therefore, the risk of the fracture of the electrode plate due to excessive shear stress is lowered.

In some embodiments, the thickness T satisfies: $0.2*t \le T \le 0.5*t$. For example, T is equal to $0.3*t$, $0.36*t$, $0.42*t$, and the like. By making the thickness T of the flexible interlayer 14 greater than or equal to 0.2 times the thickness t of the electrode plate and smaller than or equal to 0.5 times the thickness t of the electrode plate, the shear stress at the step can be more effectively dispersed when the electrode assembly 10 is circularly expanded. Moreover, the risk of the fracture of the electrode plate due to excessive shear stress is further lowered.

In order to illustrate an effect of the flexible interlayer, verification is performed below through a plurality of experimental examples. In the plurality of experimental examples, each of the first electrode plate serving as the negative electrode plate and the second electrode plate serving as the positive electrode plate has the flexible interlayer located between the end portion region and the separator segment at the inner side of the end portion region at the end portion region at the tail end. The flexible interlayer is a single-sided adhesive tape whose the bonding surface is bonded to the separator segment. The single-sided adhesive tape has a length L of 10 mm, a width W of 87 mm, and a protruding length L1 of 5 mm. The electrode structure after bonded by the single-sided adhesive tapes with different thicknesses is packaged into the housing to obtain the cylindrical battery cell. Moreover, a cyclic test is performed, and a test condition is 45°C. Charging and discharging are performed at a rate of 0.5 C (i.e., 1/2 times a capacity C of the battery cell), with a cycle depth from 10% of the SOC (state of charge) of the battery to 100% of the SOC. Moreover, when the capacity of the battery cell is attenuated to 80%, the test ends. The tested electrode assembly is disassembled, and a fracture condition of the electrode plate is observed.

With reference to the above embodiments, in the plurality of experimental examples, the thickness t of the electrode plate is 160μm. 0.07 times t is 11.2μm, and 0.8 times t is 128μm. The thickness T of the flexible interlayer 14 is 0μm, 5μm, and 150μm, respectively. These values are all outside a numerical range of 11.2μm to 128μm. It can be observed that a negative electrode plate at an inner ring has been broken at a position corresponding to the step of the end portion region. In another two groups of experimental examples, the thickness t of the electrode plate is 160μm, and the thickness T of the flexible interlayer 14 is 30μm and 60μm, respectively. These values are all within a numerical range of 11.2μm to 128μm. It can be observed that the negative electrode plate at the inner ring has not yet been broken at the position corresponding to the step of the end portion region.

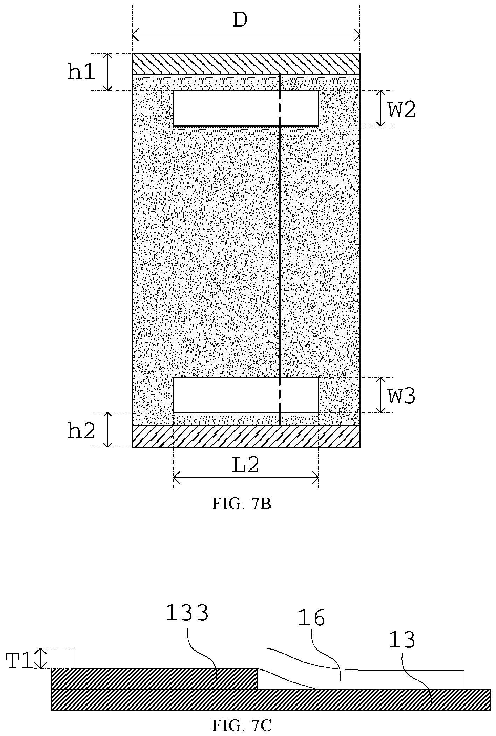

FIG. 7A is a schematic structural view of some embodiments of an electrode assembly of the present disclosure. FIG. 7B is a schematic dimension view of FIG. 7A. FIG. 7C is a schematic cross-sectional view of a third single-sided adhesive tape in FIG. 7A being pasted to a third tail end of a separator. Referring to FIG. 3 and FIG. 7A, in some embodiments, an electrode plate layer where a first tail end 11B of the first electrode plate 11 in the winding direction r is located and an electrode plate layer where a second tail end 12B of the second electrode plate 12 in the winding direction r is located are each located at an inner side of a separator layer where a third tail end 133 of the separator 13 in the winding direction r is located. Moreover, the third tail end 133 protrudes in the circumferential direction of the winding structure 100 relative to the first tail end 11B and the second tail end 12B. The third tail end 133 is bonded and fixed on the electrode assembly 10 through a third single-sided adhesive tape 16.

In FIG. 7A, an edge 133a of the third tail end 133 is bonded and fixed by the third single-sided adhesive tape 16. Since a part of the third single-sided adhesive tape 16 is bonded to the third tail end 133, and another part of the third single-sided adhesive tape 16 is bonded to the separator layer at the inner side of the third tail end 133, the third single-sided adhesive tape 16 is allowed to cross the edge 133a. A structure of the third single-sided adhesive tape 16 can refer to the foregoing first single-sided adhesive tape, and details are omitted herein.

The electrode plate layer where the first tail end 11B is located and the electrode plate layer where the second tail end 12B is located are each located at the inner side of the separator layer where the third tail end 133 is located. Moreover, the third tail end 133 is caused to protrude in the circumferential direction of the winding structure 100 relative to the first tail end 11B and the second tail end 12B. In this way, the wrapping effect of the separator 13 layer on the first electrode plate 11 and the second electrode plate 12 can be ensured, and the tail end of the electrode plate is prevented from being exposed. By providing the third single-sided adhesive tape 16 at the third tail end 133 of the separator 13 to achieve bonding and fixation, the end fixing effect of the separator 13 can be achieved. Therefore, it is ensured that the wound electrode assembly 10 is not loose.

Referring to FIG. 7B, in some embodiments, the winding structure 100 is a cylindrical winding structure; and a length L2 of the third single-sided adhesive tape 16 in the winding direction r satisfies: $0.07\pi*D \leq L2 \leq 1.5\pi*D$, where D represents a diameter of the cylindrical winding structure.

A relationship between the length L2 of the third single-sided adhesive tape 16 in the winding direction r and the perimeter $\pi*D$ of the cross section of the cylindrical winding structure reflects a wrapping degree of the third single-sided adhesive tape 16 on an outer periphery of the cylindrical winding structure. When the length L2 of the third single-sided adhesive tape 16 is too small compared with the perimeter $\pi*D$ of the cross section of the cylindrical winding structure, the end fixing effect of the separator 13 realized by the third single-sided adhesive tape 16 is affected. Moreover, there exists the risk that the electrode assembly 10 is loose due to infirm bonding and fixing.

When the length L2 of the third single-sided adhesive tape 16 is too greater than the perimeter $\pi*D$ of the cross-section of the cylindrical winding structure, the thickness can be increased due to excessive overlapping of the third single-sided adhesive tapes 16. Therefore, a cross-sectional size of the electrode assembly 10 is increased, thereby causing the difficulty of the electrode assembly 10 entering the housing 21 of the battery cell to increase.

Therefore, by making the length L2 greater than or equal to $0.07\pi$ times the diameter D and smaller than or equal to $1.5\pi$ times the diameter D, the electrode assembly 10 can be firmly bonded without loosening. Moreover, the entry of the electrode assembly 10 into the housing 21 of the battery cell can also be facilitated.

In some embodiments, the length L2 satisfies $0.25\pi*D \leq L2 \leq 1.05\pi*D$. For example, L2 is equal to $0.4\pi*D$, $0.75\pi*D$, $\pi*D$, and the like. By making the length L2 greater than or equal to $0.25\pi$ times the diameter D and smaller than or equal to $1.05\pi$ times the diameter D, the electrode assembly 10 can be bonded more firmly without loosening. Moreover, the entry of the electrode assembly 10 into the housing 21 of the battery cell can be further facilitated.

Further, the length L2 satisfies: $\pi*D < L2 \leq 1.05\pi*D$. For example, L2 is equal to $1.02\pi*D$, $1.03\pi*D$, and the like. By making the length L2 greater than $\pi$ times the diameter D and smaller than or equal to $1.05\pi$ times the diameter D, the third single-sided adhesive tape 16 slightly overlaps with the separator while bonding and fixing the tail end of the separator 13. In this way, the number of steps formed on the separator 13 by the end portion of the third single-sided adhesive tape 16 is reduced. Therefore, the shear stress of the step formed by the third single-sided adhesive tape 16 on the electrode plate during the cyclic expansion of the electrode assembly 10 is lowered. In addition, the risk of the fracture of the electrode plate under the action of shear stress is lowered.

Referring to FIG. 7A, in some embodiments, the winding structure 100 is a cylindrical winding structure; and two third single-sided adhesive tapes 16 are provided and are spaced apart from each other in an extension direction of an axis ax of the cylindrical winding structure. By providing the two third single-sided adhesive tapes 16 that are spaced apart from each other in the extension direction of the axis ax, an excessive binding force of the third single-sided adhesive tape 16 to the electrode assembly 10 can be avoided while satisfying the bonding and fixing requirements. Therefore, elongation of the current collector substrate of the electrode assembly 10 is lowered. Moreover, an amount of adhesive tapes of the third single-sided adhesive tape 13 is also reduced.

Referring to FIG. 7A and FIG. 7B, in some embodiments, in the extension direction of the axis ax of the cylindrical winding structure, a minimum distance from one of the two third single-sided adhesive tapes 16 close to a first end 100A of the cylindrical winding structure to the first end 100A is h1; a width of the one of the two third single-sided adhesive tapes 16 close to the first end 100A of the cylindrical winding structure is W2; a minimum distance from one of the two third single-sided adhesive tapes 16 close to a second end 100B of the cylindrical winding structure to the second end 100B is h2.

A width of the one of the two third single-sided adhesive tapes 16 close to the second end 100B of the cylindrical winding structure is W3. h1, W2, h2, and W3 satisfy: $0 \leq h1 \leq 0.07*H$, $0 \leq h2 \leq 0.07*H$, $0.05*H \leq W2 \leq 0.12*H$, and $0.05*H \leq W3 \leq 0.12*H$. For example, h1 is equal to $0.02*H$, $0.04*H$, $0.055*H$, and the like. h2 is equal to $0.015*H$, $0.035*H$, $0.56*H$, and the like. W2 is equal to $0.07*H$, $0.09*H$, $0.11*H$. W3 is equal to $0.06*H$, $0.08*H$, $0.1*H$. H represents a height of the cylindrical winding structure in the extension direction of the axis ax of the cylindrical winding structure.

The minimum distances h1 and h2 of the two third single-sided adhesive tapes 16 to the two ends of the cylindrical winding structure reflect the extent that the third single-sided adhesive tape 16 is close to the end portion of the winding structure 100. The widths W2 and W3 reflect a size of coverage of each of the third single-sided adhesive tapes 16.

By making h1 and h2 satisfy $0 \leq h1 \leq 0.07*H$ and $0 \leq h2 \leq 0.07*H$, and by making W2 and W3 satisfy $0.05*H \leq W2 \leq 0.12*H$ and $0.05*H \leq W3 \leq 0.12*H$, the third single-sided adhesive tape 16 can be caused to be mainly pasted in a thinning region of an active material coating at both sides of the electrode plate. In this way, the third single-sided adhesive tape 16 with a greater thickness range can be applicatory. Even if a thick third single-sided adhesive tape 16 is adopted, the entry of the electrode assembly 10 into the housing 21 of the battery cell cannot be easily affected.

Referring to FIG. 7C, in some embodiments, the third single-sided adhesive tape 16 has a thickness T1 satisfying: $5\mu m \leq T1 \leq 120\mu m$. For example, T1 is equal to $10\mu m$, $40\mu m$, $85\mu m$, $115\mu m$, and the like. An overthin third single-sided adhesive tape 16 has a lower tensile strength. Therefore, there is a risk of loosen of the electrode assembly 10 caused by fracture of the third single-sided adhesive tape 16 under the action of the tensile force when the electrode assembly 10 is circularly expanded. An over-thick third single-sided adhesive tape 16 increases the outer contour size of the electrode assembly 10, resulting in an increase in the difficulty of the electrode assembly 10 entering the housing 21.

Therefore, when the minimum distances h1 and h2 and the widths W2 and W3 satisfy suitable value ranges, by making the thickness T1 of the third single-sided adhesive tape 16 satisfy $5\mu m \leq T1 \leq 120\mu m$, the third single-sided adhesive tape 16 is caused to have a suitable tensile strength. Therefore, the risk of the fracture of the third single-sided adhesive tape 16 under the action of the tensile force when the electrode assembly 10 is circularly expanded is lowered. Moreover, the overall outer contour size of the electrode assembly 10 bonded with the third single-sided adhesive tape 16 is made more appropriate. As a result, the electrode assembly 10 is prevented from interfering with the housing 21 when entering the housing 21.

Referring to FIG. 7A and FIG. 7B, in some embodiments, in the extension direction of the axis ax of the cylindrical winding structure, a minimum distance from one of the two third single-sided adhesive tapes 16 close to a first end 100A of the cylindrical winding structure to the first end is h1. A width of the one of the two third single-sided adhesive tapes 16 close to the first end 100A of the cylindrical winding structure is W2. A minimum distance from one of the two third single-sided adhesive tapes 16 close to a second end 100B of the cylindrical winding structure to the second end is h2. A width of the one of the two third single-sided adhesive tapes 16 close to the second end 100B of the cylindrical winding structure is W3. h1, W1, h2, and W2 satisfy: $0.07*H \leq h1 \leq 0.25*H$, $0.07*H \leq h2 \leq 0.25*H$, $0.05*H \leq W2 \leq 0.23*H$, $0.05*H \leq W3 \leq 0.23*H$. For example, h1 is equal to $0.09*H$, $0.15*H$, $0.22*H$, and the like. h2 is equal to $0.1*H$, $0.18*H$, $0.24*H$, and the like. W2 is equal to $0.12*H$, $0.18*H$, $0.22*H$, and the like. W3 is equal to $0.1*H$, $0.16*H$, $0.2*H$, and the like. H represents a height of the cylindrical winding structure in the extension direction of the axis ax of the cylindrical winding structure.

The minimum distances h1 and h2 of the two third single-sided adhesive tapes 16 to the two ends of the cylindrical winding structure reflect the extent that the third single-sided adhesive tape 16 is close to the end of the winding structure 100, respectively. The widths W2 and W3 reflect the size of the coverage of each of the third single-sided adhesive tapes 16.

By making h1 and h2 satisfy $0.07*H \leq h1 \leq 0.25*H$ and $0.07*H \leq h2 \leq 0.25*H$, and by making W2 and W3 satisfy $0.05*H \leq W2 \leq 0.23*H$ and $0.05*H \leq W3 \leq 0.23*H$, other than in the thinning region of the active material coating at both sides of the electrode plate, the third single-sided adhesive tape 16 can also be caused to be pasted to a region of the active material coating having a normal thickness. Therefore, a third single-sided adhesive tape 16 with a small thickness range can be applicatory. Moreover, a firmness degree of the bonding is improved by increasing a width of the third single-sided adhesive tape 16, allowing the electrode assembly 10 not to become loosening easily.

Referring to FIG. 7C, in some embodiments, the third single-sided adhesive tape 16 has a thickness T1 satisfying: $5\mu m \leq T1 \leq 60\mu m$. For example, T1 is equal to $12\mu m$, $24\mu m$, $32\mu m$, $46\mu m$, $52\mu m$, and the like. The overthin third single-sided adhesive tape 16 has a lower tensile strength. Therefore, there is a risk of loosen of the electrode assembly 10 caused by fracture of the third single-sided adhesive tape 16 under the action of the tensile force when the electrode assembly 10 is circularly expanded. The over-thick third single-sided adhesive tape 16 increases the outer contour size of the electrode assembly 10, resulting in the increase in the difficulty of the electrode assembly 10 entering the housing 21.

Therefore, when the minimum distances h1 and h2 and the widths W2 and W3 satisfy suitable value ranges, by making the thickness T1 of the third single-sided adhesive tape 16 satisfy $5\mu m \leq T1 \leq 60\mu m$, the third single-sided adhesive tape 16 is caused to have a suitable tensile strength. Therefore, the risk of the fracture of the third single-sided adhesive tape 16 under the action of the tensile force when the electrode assembly 10 is circularly expanded is lowered. Moreover, the overall outer contour size of the electrode assembly 10 bonded with the third single-sided adhesive tape 16 is made more appropriate. As a result, the electrode assembly 10 is prevented from interfering with the housing 21 when entering the housing 21.

Based on various embodiments of the above electrode assembly of the present disclosure, the embodiments of the present disclosure further provide a battery cell, which includes the foregoing electrode assembly. The battery cell using the embodiments of the foregoing electrode assembly may obtain better use reliability.

In an aspect of the present disclosure, a battery is provided. The battery includes the foregoing battery cell. The battery using the foregoing battery cell may obtain better use reliability.

In an aspect of the present disclosure, an electric device is provided, including the foregoing battery. The electric device using the foregoing battery may obtain better use reliability.

Based on various embodiments of the foregoing battery cell of the present disclosure, the present disclosure further provides an embodiment of a battery using the embodiments of the foregoing battery cell. The battery includes the battery cell according to any one of the foregoing embodiments. The battery using the embodiments of the foregoing battery cell may obtain better use reliability.

In an aspect of the present disclosure, an electric device is provided, including the foregoing battery. The electric device using the foregoing battery may obtain better use reliability.

While the present disclosure has been described with reference to preferred embodiments, various modifications may be made and equivalents may be substituted for components thereof without departing from the scope of the present disclosure. In particular, the technical features mentioned in the various embodiments can be combined in any manner as long as there is no structural conflict. The present disclosure is not limited to the particular embodiments disclosed herein, and includes all technical solutions falling within the scope of the claims.


**Claims**

1.  An electrode assembly (10), comprising:

    a first electrode plate (11);
    a second electrode plate (12); and
    a separator (13) disposed between the first electrode plate (11) and the second electrode plate (12),
    wherein the first electrode plate (11), the second electrode plate (12), and the separator (13) are wound in a winding direction (r) and form a winding structure (100), and
    wherein a flexible interlayer (14) is provided between an end portion region (15) of at least one end of at least one of the first electrode plate (11) and the second electrode plate (12) in the winding direction (r) and a separator segment of the separator (13) that is adjacent to the end portion region (15), the flexible interlayer (14) protruding from an edge of the end portion region (15) in a circumferential direction of the winding structure (100).

2.  The electrode assembly (10) according to claim 1, wherein:

    one of the end portion region (15) and the separator segment is bonded to the flexible interlayer (14); and
    another one of the end portion region (15) and the separator segment is in slidable contact with the flexible interlayer (14).

3.  The electrode assembly (10) according to claim 2, wherein the flexible interlayer (14) comprises at least one single-sided adhesive tape.

4.  The electrode assembly (10) according to any one of claims 1 to 3, wherein the separator segment comprises:

    a first separator segment (131) located at an inner side of the end portion region (15); and
    a second separator segment (132) located at an outer side of the end portion region (15),
    wherein the flexible interlayer (14) comprises a first single-sided adhesive tape (141) bonded to one of the first separator segment (131) and the second separator segment (132).

5.  The electrode assembly (10) according to any one of claims 1 to 3, wherein the separator segment comprises:

    a first separator segment (131) located at an inner side of the end portion region (15); and
    a second separator segment (132) located at an outer side of the end portion region (15),
    wherein the flexible interlayer (14) comprises a first single-sided adhesive tape (141) and a second single-sided adhesive tape (142) that are bonded to the first separator segment (131) and the second separator segment (132), respectively; and
    wherein a protruding length of the first single-sided adhesive tape (141) in the circumferential direction of the winding structure (100) relative to the edge of the end portion region (15) is the same as or different from a protruding length of the second single-sided adhesive tape (142) in the circumferential direction of the winding structure (100) relative to the edge of the end portion region (15).

6.  The electrode assembly (10) according to any one of claims 1 to 3, wherein the flexible interlayer (14) comprises a first single-sided adhesive tape (141) bonded to each of an inner side surface and an outer side surface of the end portion region (15) in a folding manner.

7.  The electrode assembly (10) according to any one of claims 1 to 3, wherein:

    the flexible interlayer (14) comprises a first single-sided adhesive tape (141) and a second single-sided adhesive tape (142) that are bonded to an inner side surface and an outer side surface of the end portion region (15), respectively; and
    a protruding length of the first single-sided adhesive tape (141) in the circumferential direction of the winding structure (100) relative to the edge of the end portion region (15) is the same as or different from a protruding length of the second single-sided adhesive tape (142) in the circumferential direction of the winding structure (100) relative to the edge of the end portion region (15).

8.  The electrode assembly (10) according to any one of claims 1 to 7, wherein:

    the first electrode plate (11) is a negative electrode plate; and
    the second electrode plate (12) is a positive electrode plate.

9.  The electrode assembly (10) according to claim 8, wherein in the winding structure (100),

    an electrode plate layer where a first tail end (11B) of the first electrode plate (11) in the winding direction (r) is located at an outer side of an electrode plate layer where a second tail end (12B) of the second electrode plate (12) in the winding direction (r) is located;
    the first tail end (11B) protrudes in the circumferential direction of the winding structure (100) relative to the second tail end (12B);
    the flexible interlayer (14) is located between an end portion region (15) of the electrode plate layer where the first tail end (11B) is located and a separator segment of the separator (13) that is adjacent to the end portion region (15) of the electrode plate layer where the first tail end (11B) is located; and
    the flexible interlayer (14) is located between an end portion region (15) of the electrode plate layer where the second tail end (12B) is located and a separator segment of the separator (13) that is adjacent to the end portion region (15) of the electrode plate layer where the second tail end (12B) is located.

10. The electrode assembly (10) according to claim 8 or 9, wherein in the winding structure (100),

    an electrode plate layer where a first starting end (11A) of the first electrode plate (11) in the winding direction (r) is located is located at an inner side of an electrode plate layer where a second starting end (12A) of the second electrode plate (12) in the winding direction (r) is located;
    the first starting end (11A) protrudes in the circumferential direction of the winding structure (100) relative to the second starting end (12A); and
    the flexible interlayer (14) is located between an end portion region (15) of the electrode plate layer where the second starting end (12A) is located and a separator segment of the separator (13) that is adjacent to the end portion region (15) of the electrode plate layer where the second starting end (12A) is located.

11. The electrode assembly (10) according to any one of claims 1 to 10, wherein the at least one of the first electrode plate (11) and the second electrode plate (12) comprises:

    a current collector substrate (10A); and
    an active material layer (10B) at least disposed at a surface of a side of the current collector substrate (10A) close to the separator (13),
    wherein in the winding direction (r), a surface part of at least one end of the current collector substrate (10A) corresponding to the end portion region (15) is uncovered by the active material layer (10B).

12. The electrode assembly (10) according to any one of claims 1 to 11, wherein:

    the winding structure (100) is a cylindrical winding structure; and
    a length L of the flexible interlayer (14) in the winding direction (r) satisfies:

$$0.03\pi * D \leq L \leq 0.25\pi * D,$$

where D represents a diameter of the cylindrical winding structure.

13. The electrode assembly (10) according to claim 12, wherein the length L satisfies: $0.07\pi * D \leq L \leq 0.13\pi * D$.

14. The electrode assembly (10) according to any one of claims 1 to 13, wherein:

the winding structure (100) is a cylindrical winding structure; and
a width W of the flexible interlayer (14) in an axis direction of the cylindrical winding structure satisfies:

$$W1 \leq W \leq H,$$

where W1 represents a width of the end portion region (15) in the axis direction of the cylindrical winding structure, and H represents a height of the cylindrical winding structure in the axial direction of the cylindrical winding structure.

15. The electrode assembly (10) according to any one of claims 1 to 14, wherein:

a protruding length L1 of the flexible interlayer (14) in the circumferential direction of the winding structure 100 relative to the edge of the end portion region (15) satisfies:

$$(1/4) * L \leq L1 \leq (3/4) * L,$$

where L represents a length of the flexible interlayer (14) in the winding direction (r).

16. The electrode assembly (10) according to claim 15, wherein the protruding length L1 satisfies: $(1/3) * L \leq L1 \leq (2/3) * L$.

17. The electrode assembly (10) according to any one of claims 1 to 16, wherein:

the flexible interlayer (14) has a thickness T satisfying:

$$0.07 * t \leq T \leq 0.8 * t,$$

where t represents a thickness of one of the first electrode plate (11) and the second electrode plate (12) that is adjacent to the flexible interlayer (14) after primary charging and discharging of the electrode assembly (10).

18. The electrode assembly (10) according to claim 17, wherein the thickness T satisfies:

$$0.2 * t \leq T \leq 0.5 * t.$$

19. The electrode assembly (10) according to any one of claims 1 to 18, wherein:

an electrode plate layer where a first tail end (11B) of the first electrode plate (11) in the winding direction (r) is located and an electrode plate layer where a second tail end (12B) of the second electrode plate (12) in the winding direction (r) is located are each located at an inner side of a separator layer where a third tail end (133) of the separator (13) in the winding direction (r) is located;
the third tail end (133) protrudes in the circumferential direction of the winding structure (100) relative to the first tail end (11B) and the second tail end (12B); and
the third tail end (133) is bonded and fixed on the electrode assembly (10) through a third single-sided adhesive tape (16).

20. The electrode assembly (10) according to claim 19, wherein:

the winding structure (100) is a cylindrical winding structure; and

a length L2 of the third single-sided adhesive tape (16) in the winding direction (r) satisfies:

$$0.07\pi * D \le L2 \le 1.5\pi * D,$$

where D represents a diameter of the cylindrical winding structure.

21. The electrode assembly (10) according to claim 20, wherein the length L2 satisfies

$$0.25\pi * D \le L2 \le 1.05\pi * D.$$

22. The electrode assembly (10) according to claim 21, wherein the length L2 satisfies:

$$\pi * D < L2 \le 1.05\pi * D.$$

23. The electrode assembly (10) according to any one of claims 19 to 22, wherein:

the winding structure (100) is a cylindrical winding structure; and
two third single-sided adhesive tapes (16) are provided and are spaced apart from each other in an extension direction of an axis (ax) of the cylindrical winding structure.

24. The electrode assembly (10) according to claim 23, wherein in the extension direction of the axis (ax) of the cylindrical winding structure,

a minimum distance from one of the two third single-sided adhesive tapes (16) close to a first end (100A) of the cylindrical winding structure to the first end (100A) is h1;
a width of the one of the two third single-sided adhesive tapes (16) close to the first end (100A) of the cylindrical winding structure is W2;
a minimum distance from one of the two third single-sided adhesive tapes (16) close to a second end (100B) of the cylindrical winding structure to the second end (100B) is h2;
a width of the one of the two third single-sided adhesive tapes (16) close to the second end (100B) of the cylindrical winding structure is W3; and
h1, W2, h2, and W3 satisfy:

$$0 \le h1 \le 0.07 * H, \ 0 \le h2 \le 0.07 * H, \ 0.05 * H \le W2 \le 0.12 * H, \text{ and } 0.05 * H \le W3 \le 0.12 * H,$$

where H represents a height of the cylindrical winding structure in the extension direction of the axis (ax) of the cylindrical winding structure.

25. The electrode assembly (10) according to claim 24, wherein the third single-sided adhesive tape (16) has a thickness T1 satisfying: $5\mu m \le T1 \le 120\mu m$.

26. The electrode assembly (10) according to claim 23, wherein in the extension direction of the axis (ax) of the cylindrical winding structure,

a minimum distance from one of the two third single-sided adhesive tapes (16) close to a first end (100A) of the cylindrical winding structure to the first end is h1;
a width of the one of the two third single-sided adhesive tapes (16) close to the first end (100A) of the cylindrical winding structure is W2;
a minimum distance from one of the two third single-sided adhesive tapes (16) close to a second end (100B) of the cylindrical winding structure to the second end is h2;
a width of the one of the two third single-sided adhesive tapes (16) close to the second end (100B) of the cylindrical winding structure is W3; and
h1, W1, h2, and W2 satisfy:

$$0.07*H \leq h1 \leq 0.25*H, \ 0.07*H \leq h2 \leq 0.25*H, \ 0.05*H \leq W2 \leq 0.23*H, \ 0.05*H \leq W3 \leq 0.23*H,$$

where H represents a height of the cylindrical winding structure in the extension direction of the axis (ax) of the cylindrical winding structure.

27. The electrode assembly (10) according to claim 26, wherein the third single-sided adhesive tape (16) has a thickness T1 satisfying: $5\mu m \leq T1 \leq 60\mu m$.

28. A battery cell (20), comprising the electrode assembly (10) according to any one of claims 1 to 27.

29. A battery (30), comprising the battery cell (20) according to claim 28.

30. An electric device, comprising the battery (30) according to claim 29.

40

30

FIG. 1

30

31

32

20

FIG. 2A

22

23

20

21

10

D

FIG. 2B

<u>100</u>

16    12B

133    12    13

11    11B

12A    11A

r

FIG. 3

12B    15    132

11    F    131

FIG. 4A

12B    15    14    132

11    F'    131

FIG. 4B

FIG. 5A

FIG. 5B

FIG. 5C

FIG. 5D

FIG. 5E

FIG. 5F

FIG. 5G

FIG. 6A

FIG. 6B

A-A

12

14

13

11

t

T

FIG. 6C

10

100A

11C

16

133

133a

ax

13

13

16

12C

100B

FIG. 7A

FIG. 7B

FIG. 7C

## INTERNATIONAL SEARCH REPORT

| International application No. |
| --- |
| **PCT/CN2022/125414** |

| | |
| --- | --- |
| **A.** | **CLASSIFICATION OF SUBJECT MATTER** |
| | H01M10/0587(2010.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

VVEN, CNABS, CNTXT, WOTXT, EPTXT, USTXT, CNKI, IEEE: 电池, 末, 远, 尾, 终, 隔膜, 隔板, 分隔件, 分离件, 分隔膜, 破损, 之间, 涂层, 胶带, 柔性, 挠性, 绝缘, battery, final, distal, tail, end, separat+, break, broken, between, coat+, tape, flexible, insulat+

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 216720252 U (NINGDE CONTEMPORARY AMPEREX TECHNOLOGY CO., LTD.) 10 June 2022 (2022-06-10) description, paragraphs 71-133, and figures 1-8 | 1-18, 28-30 |
| Y | CN 216720252 U (NINGDE CONTEMPORARY AMPEREX TECHNOLOGY CO., LTD.) 10 June 2022 (2022-06-10) description, paragraphs 71-133, and figures 1-8 | 19-27 |
| Y | JP H0547419 A (SONY CORP.) 26 February 1993 (1993-02-26) description, paragraphs 1-52, and figures 1-6 | 19-27 |
| X | CN 112802993 A (NINGDE AMPEREX TECHNOLOGY LTD.) 14 May 2021 (2021-05-14) description, paragraphs 51-106, and figures 1-12 | 1-18, 28-30 |
| Y | CN 112802993 A (NINGDE AMPEREX TECHNOLOGY LTD.) 14 May 2021 (2021-05-14) description, paragraphs 51-106, and figures 1-12 | 19-27 |
| X | CN 1581556 A (SANYO ELECTRIC CO., LTD.) 16 February 2005 (2005-02-16) description, pages 16-40, and figures 1-21 | 1-18, 28-30 |

☑ Further documents are listed in the continuation of Box C.     ☑ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **13 June 2023** | **19 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/125414**

## C. DOCUMENTS CONSIDERED TO BE RELEVANT

| Category* | Citation of document, with indication, where appropriate, of the relevant passages | Relevant to claim No. |
|---|---|---|
| Y | CN 1581556 A (SANYO ELECTRIC CO., LTD.) 16 February 2005 (2005-02-16) description, pages 16-40, and figures 1-21 | 19-27 |
| X | CN 1801519 A (SONY CORP.) 12 July 2006 (2006-07-12) description, pages 20-40, and figures 1-21 | 1-18, 28-30 |
| Y | CN 1801519 A (SONY CORP.) 12 July 2006 (2006-07-12) description, pages 20-40, and figures 1-21 | 19-27 |
| X | CN 202495507 U (DONGGUAN AMPEREX TECHNOLOGY LTD.) 17 October 2012 (2012-10-17) description, paragraphs 16-43, and figures 3-5 | 1-18, 28-30 |
| Y | CN 202495507 U (DONGGUAN AMPEREX TECHNOLOGY LTD.) 17 October 2012 (2012-10-17) description, paragraphs 16-43, and figures 3-5 | 19-27 |
| X | JP 2005063680 A (SANYO ELECTRIC CO., LTD.) 10 March 2005 (2005-03-10) description, paragraphs 8-42, and figures 1-7 | 1-18, 28-30 |
| Y | JP 2005063680 A (SANYO ELECTRIC CO., LTD.) 10 March 2005 (2005-03-10) description, paragraphs 8-42, and figures 1-7 | 19-27 |
| X | JP 2009134915 A (PANASONIC CORP.) 18 June 2009 (2009-06-18) description, paragraphs 7-79, and figures 1-5 | 1-8, 28-30 |
| Y | JP 2009134915 A (PANASONIC CORP.) 18 June 2009 (2009-06-18) description, paragraphs 7-79, and figures 1-5 | 19-27 |

Form PCT/ISA/210 (second sheet) (July 2022)

## INTERNATIONAL SEARCH REPORT
### Information on patent family members

International application No.

**PCT/CN2022/125414**

| Patent document cited in search report | | | Publication date (day/month/year) | Patent family member(s) | | | Publication date (day/month/year) |
|---|---|---|---|---|---|---|---|
| CN | 216720252 | U | 10 June 2022 | None | | | |
| JP | H0547419 | A | 26 February 1993 | JP | 3466631 | B2 | 17 November 2003 |
| CN | 112802993 | A | 14 May 2021 | CN | 214203736 | U | 14 September 2021 |
| | | | | WO | 2022165850 | A1 | 11 August 2022 |
| CN | 1581556 | A | 16 February 2005 | US | 2005031948 | A1 | 10 February 2005 |
| | | | | US | 7378182 | B2 | 27 May 2008 |
| | | | | JP | 2005056682 | A | 03 March 2005 |
| | | | | JP | 4359100 | B2 | 04 November 2009 |
| | | | | CN | 1301564 | C | 21 February 2007 |
| CN | 1801519 | A | 12 July 2006 | JP | 2006134758 | A | 25 May 2006 |
| | | | | JP | 4591674 | B2 | 01 December 2010 |
| | | | | KR | 20060052512 | A | 19 May 2006 |
| | | | | US | 2006115736 | A1 | 01 June 2006 |
| CN | 202495507 | U | 17 October 2012 | None | | | |
| JP | 2005063680 | A | 10 March 2005 | JP | 4245429 | B2 | 25 March 2009 |
| JP | 2009134915 | A | 18 June 2009 | None | | | |

Form PCT/ISA/210 (patent family annex) (July 2022)